(19) Europäisches Patentamt
European Patent Office
Office européen des brevets

(11) **EP 2 823 598 B1**

(12) **EUROPÄISCHE PATENTSCHRIFT**

(45) Veröffentlichungstag und Bekanntmachung des Hinweises auf die Patenterteilung:
**22.08.2018   Patentblatt 2018/34**

(21) Anmeldenummer: **13707819.2**

(22) Anmeldetag: **01.03.2013**

(51) Int Cl.:
*H04L 9/32* (2006.01)          *G06Q 20/38* (2012.01)

(86) Internationale Anmeldenummer:
**PCT/EP2013/000616**

(87) Internationale Veröffentlichungsnummer:
**WO 2013/131631 (12.09.2013 Gazette 2013/37)**

(54) **VERFAHREN ZUR ERSTELLUNG EINER ABGELEITETEN INSTANZ**

METHOD FOR CREATING A DERIVATIVE INSTANCE

PROCÉDÉ D'ÉTABLISSEMENT D'UNE INSTANCE DÉRIVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2012   DE 102012004484**

(43) Veröffentlichungstag der Anmeldung:
**14.01.2015   Patentblatt 2015/03**

(73) Patentinhaber: **Giesecke+Devrient Mobile Security GmbH**
**81677 München (DE)**

(72) Erfinder:
• **MEISTER, Gisela**
**81737 München (DE)**
• **EICHHOLZ, Jan**
**80997 München (DE)**

(56) Entgegenhaltungen:
**DE-A1-102009 040 027     US-A- 5 883 810**

**Beschreibung**

Die vorliegende Erfindung betrifft ein Verfahren zur Erstellung einer von einem Originaldatenträger abgeleiteten Instanz, einen entsprechenden Originaldatenträger, eine davon abgeleitete Instanz sowie ein System, umfassend eine vertrauenswürdige Instanz und den Originaldatenträger, welche eingerichtet sind, das Verfahren auszuführen.

Portable Datenträger werden vielfach als Sicherheitsdokumente verwendet, beispielsweise in Form eines Personalausweises, eines Reisepasses, einer Signaturkarte oder dergleichen. Dabei verfügen moderne Sicherheitsdokumente mittlerweile vielfach über einen Speicher und einen Prozessor und sind eingerichtet, Sicherheitsapplikationen auszuführen. Anwendungsbeispiele für solche Sicherheitsapplikationen sind eine Authentisierung gegenüber einem Terminal, die Herstellung eines gesicherten Datenkommunikationskanals, das elektronische Signieren von Daten sowie das Verifizieren von Signaturen, und dergleichen. Auf diese Weise können solche Datenträger eingesetzt werden, mit beliebigen Dienstanbietern zu interagieren, um sich beispielsweise für elektronische Transaktionen, z.B. über das Internet, zu authentisieren und diese auf gesicherte Weise durchzuführen. Weiter können die Sicherheitsdokumente zum Speichern von Daten, wie z.B. persönlichen und/oder sicherheitsrelevanten Daten sowie sonstigen Nutzdaten, eingesetzt werden und beispielsweise Zugangskontrollsysteme unterstützen.

Verlust oder Diebstahl eines solchen portablen Datenträgers kann für den Nutzer sehr nachteilig sein. Zum einen ist der Nutzer dann in seinem Handeln unmittelbar eingeschränkt, zum anderen besteht die Gefahr, dass Dritte zumindest temporär und in unberechtigter Weise den möglicherweise entwendeten Datenträger zum Schaden des eigentlich Berechtigten nutzen. Weiter besteht auch für den eigentlichen Nutzer, bei dauerhafter Verwendung des Datenträgers im täglichen Leben, die Gefahr von Abnutzung und Verschleiß.

DE 10 2009 040 027 offenbart ein Verfahren zum Aktivieren eines tragbaren Datenträgers, bei dem einem Benutzer ein erster Datenträger in einem inaktiven Zustand bereitgestellt wird, nachdem der Benutzer den ersten Datenträger mit Hilfe eines zweiten tragbaren Datenträgers bei einer zentralen Instanz beantragt hat, wobei der erste und zweite Datenträger Zugriff auf Authentisierungsdaten zum gegenseitigen Authentisieren haben. US 5883810 zeigt eine Karte mit fester Kartennummer, wobei für eine Transaktion eine temporäre Kartennummer verwendet wird.

Aufgabe der vorliegenden Erfindung ist es, den vorstehenden Nachteilen Rechnung zu tragen.

Diese Aufgabe wird durch ein Verfahren bzw. einen ersten und zweiten Datenträger sowie ein System mit den Merkmalen der nebengeordneten Ansprüche gelöst. Vorteilhafte Ausgestaltungen und Weiterbildungen sind in den abhängigen Ansprüchen angegeben.

Die Erfindung basiert auf dem Ansatz, einen von einem Originaldatenträger, beispielsweise einem Personalausweis, mittels eines nachstehend im Detail beschriebenen Verfahrens eine abgeleitete Instanz bereitzustellen. Die Erstellung der abgeleiteten Instanz wird dabei von einer vertrauenswürdigen Instanz, beispielsweise einem so genannten "Trusted Service Manager", überwacht und zertifiziert. Die abgeleitete Instanz kann dann von dem Nutzer im Wesentlichen anstelle des Originaldatenträgers eingesetzt werden. D.h. jedwede Transaktion, welche ursprünglich gegenüber einem Dienstanbieter mittels des Originaldatenträgers durchgeführt werden konnte, kann nun mittels einer geeigneten, abgeleiteten Instanz erfolgen. Dabei ist es möglich und auch vorgesehen, für verschiedene, mittels des Originaldatenträgers durchführbare Transaktionen jeweils verschiedene, auf einzelne oder eine kleine Teilmenge der Transaktionen beschränkte abgeleitete Instanzen zu erstellen. In einem Verfahren zur Erstellung einer von einem Originaldatenträger abgeleiteten Authentisierungsinstanz enthält der Originaldatenträger ein für den Originaldatenträger individuelles Schlüsselpaar, welches einen öffentlichen Schlüssel und einen geheimen Schlüssel des Originaldatenträgers umfasst, sowie ein Zertifikat über den öffentlichen Schlüssel des Originaldatenträgers. Zunächst wird ein geheimer Schlüssels für die abgeleitete Authentisierungsinstanz aus dem geheimen Schlüssel des Originaldatenträgers durch den Originaldatenträger abgeleitet. Zudem werden Ableitungsdaten für die abgeleitete Authentisierungsinstanz gebildet. Als Authentisierungsdaten werden an die abgeleitete Authentisierungsinstanz die Ableitungsdaten, das Zertifikat des öffentlichen Schlüssels des Originaldatenträgers sowie ein abgeleitetes Schlüsselpaar übertragen. Das abgeleitete Schlüsselpaar wird durch den abgeleiteten geheimen Schlüssel und den öffentlichen Schlüssel des Originaldatenträgers gebildet.

Die abgeleitete Instanz kann sich nun gegenüber einem Authentisierungspartner authentisieren, ohne dass sie ein eigenes Zertifikat für einen eigenen Schlüssel benötigt, denn sie übernimmt das Zertifikat und den zugehörigen für den Originaldatenträger individuellen öffentlichen Schlüssel.

Der Authentisierungspartner verwendet im Rahmen der Authentisierung den datenträgerindividuellen öffentlichen Schlüssel des Originaldatenträgers als den öffentlichen Schlüssel der abgeleiteten Instanz. Insbesondere die Schritte des Authentisierungsprotokolls, welche bei Authentisierung mit dem Originaldatenträger dessen öffentlichen Schlüssel verwenden, bleiben unverändert. Der Authentisierungspartner muss die Ableitung des Schlüssels also nicht mehr nachvollziehen. Vielmehr verwendet er einen Ableitungsparameter aus den Ableitungsdaten, um ein in anderen Schritten (die nicht den öffentlichen Schlüssel der Authentisierungsinstanz verwenden) abgeleitetes Authentisierungsprotokolls durchzuführen.

Anhand der Ableitungsdaten kann der Authentisierungspartner erkennen, dass er ein abgeleitetes Authentisierungsprotokoll durchführen muss. Die Ableitungsdaten enthalten den konkreten zu verwendenden Ableitungsparameter.

Es ist besonders vorteilhaft, wenn die Ableitungsdaten ein Zertifikat insbesondere einer vertrauenswürdigen Instanz enthalten, beispielsweise in der Form eines Attributzertifikates. Die Anforderungen an ein Attributzertifikat (Aussteller, Schlüssellänge, ...) sind unabhängig von und/oder geringer als die Anforderungen an ein Schlüsselzertifikat. Alternativ ist es jedoch auch denkbar, die Ableitungsdaten in einem sicheren Speicherbereich der abgeleiteten Instanz abzulegen, auf den beispielsweise nur die sichere Instanz schreibend zugreifen kann. In beiden Fällen kann der Authentisierungspartner die Ableitungsdaten als vertrauenswürdig verwenden.

In den Ableitungsdaten können Nutzungsbeschränkungen für die abgeleitete Authentisierungsinstanz enthalten sein. Es wird somit bei der Erstellung der abgeleiteten Instanz frei wählbar für welchen Zeitraum, für welche Anwendung, bis zu welchem Betrag und/oder in welchem Land die abgeleitete Instanz gültig ist.

Die abgeleitete Instanz wird in der Regel auf einem weiteren (dem abgeleiteten) tragbaren Datenträger erstellt. Beispielsweise kann die abgeleitete Instanz eine (von mehreren) Anwendung(en) auf dem tragbaren Datenträger sein. Tragbare Datenträger können Chipkarten, wie SIM-Karten, sichere Massenspeicherkarten oder Transaktions- bzw. Kreditkarten, USB-Token oder Ausweisdokumente, wie Personalausweis, Reisepass oder Führerschein, sein. Es ist aber auch möglich die abgeleitete Instanz als virtuellen Datenträger zu erstellen. Virtuelle Datenträger werden in der Regel auf Endgeräten mit sicherer Ausführungsumgebung (Trusted Execution Environment) als Anwendung in der sicheren Ausführungsumgebung ausgeführt oder in fest mit Endgeräten verbundenen Sicherheitsmodulen (TPM, UICC, M2M-Modul) ausgeführt. Teilweise wird im Folgenden vereinfachend vom abgeleiteten Datenträger gesprochen, unabhängig davon, ob die abgeleitete Instanz auf einem tragbaren Datenträger oder als virtueller Datenträger implementiert ist.

Über eine geeignete Ableitung ist die abgeleitete Instanz an den Originaldatenträger gebunden, verkörpert somit für Dritte nachprüfbar die gleiche "Identität" wie der Originaldatenträger. Über ein zusätzliches Ableitungszertifikat kann der abgeleitete Datenträger hinsichtlich verschiedener Attribute gegenüber dem Originaldatenträger eingeschränkt werden, beispielsweise hinsichtlich seiner Nutzungsdauer, des Nutzungsumfang und dergleichen.

Der Originaldatenträger kann dann an einem sicheren Ort aufbewahrt und daher gegen die vorstehend genannten Gefahren wirkungsvoll geschützt werden. Der Schaden oder die Beeinträchtigung bei Verlust oder Diebstahl des abgeleiteten Datenträgers kann schneller eingegrenzt und/oder behoben werden als Verlust oder Diebstahl des Originaldatenträgers. Beispielsweise erfordert die Herstellung eines weiteren abgeleiteten Datenträgers, im Falle eines Ausfalls des im Betrieb befindlichen abgeleiteten Datenträgers, sei es durch Beschädigung oder durch sonstiges Abhandenkommen, weit weniger Zeit und Aufwand als eine Beantragung eines neuen Originaldatenträgers, woran zumeist offizielle Stellen beteiligt sind. Aufgrund des in der Regel beschränkbaren Funktionsumfangs des abgeleiteten Datenträgers im Vergleich zum Originaldatenträger lässt sich weiterhin ein Schadensrisiko im Verlust- oder Diebstahlsfall von vorne herein eingrenzen.

Wie bereits angedeutet, kann Hardwaregrundlage für einen erfindungsgemäß hergestellten abgeleiteten Datenträger beispielsweise eine Chipkarte oder ein vergleichbarer portabler Datenträger sein. Alternativ ist es möglich, die Funktionalitäten des abgeleiten virtuellen Datenträgers in einer geeigneten, vorzugsweise gesicherten Umgebung, wie beispielsweise einem so genannten "Trusted Execution Environment" (TEE), eines Mobilfunkendgeräts, eines Smartphones, eines Tablets oder dergleichen, zu installieren.

Ein erster erfindungsgemäßer portabler Datenträger umfasst zumindest einen Speicher, einen Prozessor und eine Datenkommunikationsschnittstelle zur Datenkommunikation mit einer externen Instanz. Der erste Datenträger ist eingerichtet, in der nachstehend detailliert beschriebenen Rolle des Originaldatenträgers zusammen mit einer dazu eingerichteten, vertrauenswürdigen Instanz ein nachstehend detailliert beschriebenes Verfahren zur Erstellung einer erfindungsgemäß abgeleiteten Instanz durchzuführen.

Ein zweiter erfindungsgemäßer portabler Datenträger umfasst ebenso zumindest einen Speicher, einen Prozessor und eine Datenkommunikationsschnittstelle zur Datenkommunikation mit einer externen Instanz. Der zweite Datenträger zeichnet sich dadurch aus, dass er im Rahmen des nachfolgend beschriebenen Verfahrens als von dem ersten Datenträger, welcher den Originaldatenträger repräsentiert, abgeleiteter Datenträger hergestellt worden ist.

Ein erfindungsgemäßes System schließlich umfasst den ersten erfindungsgemäßen Datenträger als Originaldatenträger und eine vertrauenswürdige Instanz. Die vertrauenswürdige Instanz und der erste Datenträger sind eingerichtet, einen von dem ersten Datenträger in der Rolle des Originaldatenträgers abgeleiteten Datenträger, d.h. einen zweiten erfindungsgemäßen Datenträger, in dem nachfolgend beschriebenen, erfindungsgemäßen Verfahren herzustellen.

Ein Verfahren zur Erstellung eines von einem Originaldatenträger abgeleiteten Instanz umfasst folgende Schritte:

In einem ersten Schritt authentisiert sich der Originaldatenträger gegenüber einer vertrauenswürdigen Instanz. Dies geschieht unter Verwendung eines öffentlichen Schlüssels und eines geheimen Schlüssels des Originaldatenträgers sowie eines Zertifikats über den öffentlichen Schlüssel des Originaldatenträgers.

Im Rahmen dieser Authentisierung empfängt die vertrauenswürdige Instanz den öffentlichen Schlüssel des Originaldatenträgers sowie das Zertifikat über diesen Schlüssel. Dieses Zertifikat wird nachfolgend in den abgeleiteten Datenträger eingebracht werden, damit sich dieser - nach dessen Fertigstellung, im Betrieb - mittels desselben Schlüsselzertifikats ausweisen kann wie der Originaldatenträger. Damit wird eine eindeutige Kopplung des Originaldatenträgers an den abgeleiteten Datenträger hergestellt.

Weiter kann eine Authentisierung der vertrauenswürdigen Instanz gegenüber dem Originaldatenträger vorgesehen sein, beispielsweise auf Basis geeigneter Authentisierungsschlüssel oder dergleichen.

Wie nachfolgend beschrieben, wird im Rahmen der Authentisierung des Originaldatenträgers gegenüber der vertrauenswürdigen Instanz in der Regel ein gesicherter Datenkommunikationskanal zwischen diesen beiden Parteien hergestellt, so dass die nachfolgende Datenkommunikation gesichert erfolgen kann. Dazu wird vorzugsweise ein geheimer Kommunikationsschlüssel zwischen dem Originaldatenträger und der vertrauenswürdigen Instanz vereinbart. Dies kann beispielsweise auf der Basis des öffentlichen und des geheimen Schlüssels des Originaldatenträgers sowie eines öffentlichen Sitzungsschlüssels und eines geheimen Sitzungsschlüssels der vertrauenswürdigen Instanz geschehen. Vorzugsweise kommt dazu ein Diffie-Hellman-Schlüsselaustauschverfahren oder ein ähnliches, geeignetes Verfahren zum Einsatz. Der öffentliche Schlüssel des Originaldatenträgers wird dabei mittels Exponentiation einer vorgegebenen Primitivwurzel mit dem geheimen Schlüssel des Originaldatenträgers bestimmt. In analoger Weise wird der öffentliche Sitzungsschlüssel der vertrauenswürdigen Instanz mittels Exponentiation der vorgegebenen Primitivwurzel mit dem geheimen Sitzungsschlüssel der vertrauenswürdigen Instanz bestimmt.

Unter einem "Sitzungsschlüssel" wird im Rahmen der vorliegenden Erfindung stets ein Schlüssel verstanden, welcher für jede "Sitzung", d.h. hier bei der Durchführung jedes Authentisierungsverfahrens, neu bestimmt wird. In der Regel sind für verschiedene Sitzungen erzeugte Sitzungsschlüssel verschieden.

In einem zweiten Schritt des erfindungsgemäßen Verfahrens leitet der Originaldatenträger aus dem geheimen Schlüssel des Originaldatenträgers einen geheimen Schlüssel für den abgeleiteten Datenträger ab.

Im späteren Betrieb verwendet dann der abgeleitete Datenträger zur Authentisierung gegenüber einem Dienstanbieter den öffentlichen Schlüssel des Originaldatenträgers samt zugehörigem Zertifikat als öffentlichen Schlüssel und den im zweiten Schritt des erfindungsgemäßen Verfahrens abgeleiteten Schlüssel als geheimen Schlüssel. Die Art der Ableitung des geheimen Schlüssels ist dabei an das spezifische Kommunikationsprotokoll angepasst, mittels welchen die Authentifizierung des abgeleiteten Datenträgers durch den Dienstanbieter erfolgen soll. Eine bevorzugte Art der Schlüsselableitung in Kombination mit einem entsprechenden Kommunikationsprotokoll wird nachfolgend im Detail beschrieben.

In einem dritten Schritt des erfindungsgemäßen Verfahrens bildet die vertrauenswürdige Instanz ein Ableitungszertifikat für den abgeleiteten Datenträger.

Anhand dieses Zertifikats kann im späteren Betrieb des abgeleiteten Datenträgers beispielsweise ein Dienstanbieter erkennen, dass der abgeleitete Datenträger ordnungsgemäß, unter Aufsicht der vertrauenswürdigen Instanz und von dem der gleichen Identität zugeordneten Originaldatenträger abgeleitet, hergestellt worden ist. Wie nachstehend genauer erläutert, kann das Ableitungszertifikat, welches in der Regel als Attributzertifikat bereitgestellt wird, eine Reihe von Attributen des abgeleiteten Datenträgers beschreiben, beispielsweise dessen Ablaufdatum, welches von dem Dienstanbieter in einfacher und bekannter Weise geprüft werden können.

In einem vierten Schritt des erfindungsgemäßen Verfahrens werden Authentisierungsdaten an den abgeleiteten Datenträger übertragen. Diese Authentisierungsdaten, welche der abgeleitete Datenträger im späteren Betrieb zur Authentisierung gegenüber einem Dienstanbieter verwendet, umfassen das Ableitungszertifikat und den abgeleiteten geheimen Schlüssel sowie den öffentlichen Schlüssel des Originaldatenträgers und das Zertifikat über diesen öffentlichen Schlüssel. Wie bereits erwähnt, dient dieser mit dem Schlüsselzertifikat versehene öffentliche Schlüssel des Originaldatenträgers nun auch dem abgeleiteten Datenträger als öffentlicher Schlüssel. Derart ausgestattet könnte der abgeleitete Datenträger bereits beispielsweise zu Authentisierungszwecken, beispielsweise zur Zugangskontrolle oder ähnlichem, verwendet werden.

In dem Fall, dass der Originaldatenträger weitere, von den vorstehend erwähnten Authentisierungsdaten verschiedene Daten, in der Regel persönliche und/oder sicherheitsrelevante Daten und/oder beliebige andere Nutzdaten, umfasst, auf welche bei der Verwendung des Datenträgers seitens eines Dienstanbieters oder dergleichen zugegriffen wird, kann das erfindungsgemäße Verfahren weitere optionale Schritte umfassen.

In einem ersten optionalen Schritt des Verfahrens liest die vertrauenswürdige Instanz die Daten - nach erfolgter Authentisierung zwischen Originaldatenträger und vertrauenswürdiger Instanz - aus dem Originaldatenträger aus. Diese Daten werden in einem späteren Schritt in den abgeleiteten Datenträger eingebracht, damit dieser nach Fertigstellung anstelle des Originaldatenträgers verwendet werden kann. Art und Umfang der in dieser Weise auf den abgeleiteten Datenträger übertragenen Daten können dessen spätere Einsatzmöglichkeiten beschreiben und/oder beschränken.

Dabei kann es vorgesehen sein, dass die vertrauenswürdige Instanz zum Auslesen dieser Daten ein Berechtigungszertifikat vorlegt, welches den Umfang angibt, in welchem der vertrauenswürdigen Instanz Zugriff auf die Daten des Originaldatenträgers gestattet ist. Dieses Zertifikat kann von dem Originaldatenträger geprüft werden. Ein Zugriff auf die Daten des Originaldatenträgers wird nur gewährt, wenn eine Verifikation des Zertifikats erfolgreich ist.

Bevor die vertrauenswürdige Instanz die aus dem Originaldatenträger ausgelesenen Daten in einem abschließenden Schritt an den abgeleiteten Datenträger überträgt, authentisiert sich der abgeleitete Datenträger gegenüber der vertrauenswürdigen Instanz unter Verwendung der zuvor übertragenen Authentisierungsdaten. Auf diese Weise kann die vertrauenswürdige Instanz den abgeleiteten Datenträger anhand dessen Authentisierungsdaten, insbesondere anhand des Schlüsselzertifikats über den öffentlichen Schlüssel, authentifizieren. Zusätzlich kann die vertrauenswürdige Instanz das zuvor von ihr erstellte und an den abgeleiteten Datenträger übertragene Ableitungszertifikat verifizieren. Insbesondere kann im Rahmen dieser Authentisierung ein gesicherter Datenkommunikationskanal für die Übertragung der Daten hergestellt werden.

Das Protokoll, über welches sich der abgeleitete Datenträger gegenüber der vertrauenswürdigen Instanz mittels der Authentisierungsdaten authentisiert, kann von dem Protokoll abweichen, über welches sich der Originaldatenträger gegenüber der vertrauenswürdigen Instanz authentisiert hat. Dies hängt, wie nachfolgend detailliert beschrieben, von der Art der Ableitung des geheimen Schlüssels des abgeleiteten Datenträgers ab.

Vorzugsweise wird der geheime Schlüssel für den abgeleiteten Datenträger, welcher durch den Originaldatenträger mittels einer geeigneten Ableitung aus dem geheimen Schlüssel des Originaldatenträgers gebildet wird, unter Verwendung einer Zufallszahl abgeleitet. Dazu kann jede geeignete Operation verwendet werden, welche als Eingabedaten zumindest den geheimen Schlüssel des Originaldatenträgers und die Zufallszahl aufnehmen und zu dem geheimen Schlüssel des abgeleiteten Datenträgers verarbeiten kann. Beispielsweise können mathematische Operationen, wie Multiplikation, Exponentiation oder ähnliche, zur Anwendung kommen. Anstelle oder zusätzlich zu der Zufallszahl können andere Parameter, beispielsweise für den Originaldatenträger spezifische Parameter oder dergleichen, in die Ableitung des geheimen Schlüssels mit eingehen.

Es ist aber auch möglich, dass der geheime Schlüssel des abgeleiteten Datenträgers mit dem geheimen Schlüssel des Originaldatenträgers übereinstimmt, d.h. mittels der Identitätsfunktion abgeleitet worden ist.

Die Ableitung des geheimen Schlüssels des abgeleiteten Datenträgers erfolgt dabei derart, dass, wenn sich der Originaldatenträger unter Verwendung seines Schlüsselpaars, d.h. seines öffentlichen und geheimen Schlüssels, gegenüber einem Dienstanbieter über ein vorgegebenes Kommunikationsprotokoll authentisieren konnte, sich der abgeleitete Datenträger unter Verwendung seines Schlüsselpaares gegenüber dem Dienstanbieter über ein von dem vorgegebenen Protokoll abgeleitetes Protokoll authentisieren kann. Dabei umfasst das Schlüsselpaar des abgeleiteten Datenträgers dessen öffentlichen Schlüssel, der mit dem öffentlichen Schlüssel des Originaldatenträgers übereinstimmt, sowie dessen abgeleiteten Schlüssel, der, wie erwähnt, von dem geheimen Schlüssel des Originaldatenträgers abgeleitet worden ist.

Die Ableitung des geheimen Schlüssels und die genannte Ableitung des Protokolls sind dabei aufeinander abgestimmt. Im einfachsten Fall wird als Ableitung jeweils die identische Ableitung verwendet, d.h. der abgeleitete Datenträger authentisiert sich gegenüber dem Dienstanbieter über dasselbe Protokoll wie der Originaldatenträger. Nachfolgend wird eine alternative, bevorzugte Ausführungsform eines solchen Paares von Ableitungen, für den geheimen Schlüssel und für das verwendete Authentisierungsprotokoll, beschrieben.

Wie erwähnt, kann bei der Authentisierung des Originaldatenträgers gegenüber der vertrauenswürdigen Instanz als Protokoll eine einfache Version eines Diffie-Hellman-Schlüsselaustauschverfahrens zum Vereinbaren eines Kommunikationsschlüssels zum Einsatz kommen. Ausgehend von einer Primitivwurzel g, welche beiden Parteien bekannt ist, berechnet sich der jeweilige öffentliche Schlüssel mittels Exponentiation der Primitivwurzel g (modulo einer ebenfalls beiden Seiten bekannten Primzahl; diese und analoge modulare Operationen werden hier und im Folgenden aus Gründen der Lesbarkeit weggelassen) mit dem jeweiligen geheimen Schlüssel. D.h. der öffentliche Schlüssel des Originaldatenträgers PKO berechnet sich als $g^{SKO}$, wobei mit SKO der geheime Schlüssel des Originaldatenträgers bezeichnet wird: PKO := $g^{SKO}$.

In analoger Weise gilt PKI := $g^{SKI}$, wobei mit PKI und SKI der öffentliche und der geheime Schlüssel der vertrauenswürdigen Instanz bezeichnet werden. Der Kommunikationsschlüssel berechnet sich dann, aus Sicht des Originaldatenträgers, nachdem dieser den öffentlichen Schlüssel der vertrauenswürdigen Instanz mittels seines eigenen geheimen Schlüssels exponentiert hat, als KKO = $PKI^{SKO}$ = $g^{SKI*SKO}$. Die vertrauenswürdige Instanz errechtet sich den Kommunikationsschlüssel in analoger Weise: KKI = $PKO^{SKI}$ = $g^{SKO*SKI}$ = KKO.

Die Schlüssel der vertrauenswürdigen Instanz sind, wie erwähnt, Sitzungsschlüssel, d.h. der geheime Schlüssel der vertrauenswürdigen Instanz wird für jedes neue Authentisierungsverfahren neu bestimmt.

Angenommen, der geheime Schlüssel des abgeleiten Datenträgers, nachfolgend mit SKA bezeichnet, wird gemäß der hier beschriebenen, bevorzugten Ausführungsform aus dem geheimen Schlüssel des Originaldatenträgers abgeleitet durch eine Multiplikation dieses Schlüssels mit einer Zufallszahl: SKA := SKO*RND. Der öffentliche Schlüssel des abgeleiteten Datenträgers, mit PKA bezeichnet, entspricht - aus nachfolgend erläuterten Gründen - dem öffentlichen Schlüssel PKO des Originaldatenträgers. Die Zufallszahl RND bleibt geheim, d.h. verlässt den Originaldatenträger nicht.

Um eine Authentisierung des abgeleiteten Datenträgers gegenüber der vertrauenswürdigen Instanz weiterhin zu gewährleisten, muss das vorstehend skizzierte Diffie-Hellman-Verfahren geringfügig angepasst werden, d.h. in einer zu der Ableitung des geheimen Schlüssels des abgeleiteten Datenträgers entsprechenden Weise abgeleitet werden.

Dazu bildet der Originaldatenträger, bereits im Rahmen des Verfahrens zur Herstellung des abgeleiteten Datenträgers, einen abgeleiteten Basiswert, der nachfolgend mit g1 bezeichnet wird. Dieser errechnet sich aus einer Exponentiation der vorgegebenen Primitivwurzel g mit dem Reziproken der Zufallszahl RND, die bereits zur Bildung des abgeleiteten geheimen Schlüssels für den abgeleiteten Datenträger verwendet worden ist: g1 := g^(1/RND). Dieser Basiswert wird an die vertrauenswürdige Instanz übertragen und bildet in dieser Ausführungsform einen Anteil der an den abgeleiteten Datenträger zu übertragenden Authentisierungsdaten. Der Wert g1 repräsentiert quasi den "öffentlichen Anteil" der Zufallszahl RND. Nach heutiger Kenntnis ist es praktisch nicht möglich, mit vertretbarem Aufwand aus dem Wert g1 den Wert RND zurückzurechnen, d.h. der Wert RND bleibt für die vertrauenswürdige Instanz weiter geheim.

Die vertrauenswürdige Instanz bildet nun, gemäß dem abgeleiteten Protokoll, seinen öffentlichen Schlüssel in abgewandelter Weise, nämlich vermöge PKI := g1^(SKI) (anstelle von PKI := g^(SKI)).

Auch der öffentliche Schlüssel des abgeleiteten Datenträgers kann in dieser Weise gebildet werden:

$$
\begin{aligned}
PKA \ &:= g1^{\wedge}(SKA) \\
&= g^{\wedge}(1/RND)^{\wedge}(SKA) \\
&= g^{\wedge}((1/RND)*RND*SKO) \\
&= g^{\wedge}(SKO) \\
&= PKO.
\end{aligned}
$$

Auf Basis der in der beschriebenen Weise erzeugten Schlüsselpaare kann nun wieder eine Schlüsselvereinbarung wie zuvor erfolgen:
Der abgeleitete Datenträger berechnet

$$
\begin{aligned}
KKA \ &:= PKI^{\wedge}SKA \\
&= (g1^{\wedge}(SKI))^{\wedge}SKA \\
&= (g^{\wedge}(1/RND)^{\wedge}(SKI))^{\wedge}SKA \\
&= g^{\wedge}((1/RND)*SKI*SKO*RND) \\
&= g^{\wedge}(SKI*SKO).
\end{aligned}
$$

Die vertrauenswürdige Instanz ihrerseits berechnet

$$
\begin{aligned}
KKI \ &:= PKA^{\wedge}SKI \\
&= PKO^{\wedge}SKI \\
&= (g^{\wedge}SKO)^{\wedge}(SKI) \\
&= g^{\wedge}(SKI*SKO) = KKA.
\end{aligned}
$$

Diese Vorgehensweise gemäß der geschilderten bevorzugten Ausführungsform kann wie folgt allgemein zusammengefasst werden: Im Rahmen des Authentisierens des abgeleiteten Datenträgers gegenüber der vertrauenswürdigen Instanz wird ein Kommunikationsschlüssel zwischen dem abgeleiteten Datenträger und der vertrauenswürdigen Instanz vereinbart. Dies geschieht auf der Basis des öffentlichen und des geheimen Schlüssels des abgeleiteten Datenträgers sowie eines öffentlichen Sitzungsschlüssels und eines geheimen Sitzungsschlüssels der vertrauenswürdigen Instanz. Vorzugsweise wird zur Schlüsselvereinbarung eine Variante des Diffie-Hellman-Schlüsselaustauschverfahrens herangezogen. Der öffentliche Schlüssel des abgeleiteten Datenträgers errechnet sich mittels Exponentiation des Basiswerts mit dem geheimen Schlüssel des abgeleiteten Datenträgers und entspricht dann dem öffentlichen Schlüssel des Originaldatenträgers. Der geheime Schlüssel des abgeleiteten Datenträgers wird mittels Multiplikation des geheimen Schlüssels des Originaldatenträgers mit einer Zufallszahl gebildet. Der öffentliche Sitzungsschlüssel der vertrauenswürdigen Instanz schließlich errechnet sich mittels Exponentiation des Basiswerts mit dem geheimen Sitzungsschlüssel der vertrauenswürdigen Instanz. Der Basiswert ist, wie erwähnt, aus einer Exponentiation der vorgegebenen Primitivwurzel mit dem Reziproken der Zufallszahl, die bereits zur Bildung des abgeleiteten geheimen Schlüssels für den abgeleiteten Datenträger verwendet worden ist, bestimmt worden.

In entsprechender Weise kann jeweils ein Protokoll, welches im Rahmen der Authentisierung des abgeleiteten Datenträgers gegenüber der vertrauenswürdigen Instanz verwendet werden soll, an die Art einer Ableitung des geheimen Schlüssels des abgeleiteten Datenträgers von dem geheimen Schlüssel des Originaldatenträgers angepasst werden.

Wie erwähnt, bildet die vertrauenswürdige Instanz im Rahmen des erfindungsgemäßen Verfahrens ein Ableitungszertifikat für den abgeleiteten Datenträger. Dies kann auf verschiedene Art und Weise erfolgen.

Gemäß einer ersten Variante kann die vertrauenswürdige Instanz das Ableitungszertifikat über den von dem Originaldatenträger gemäß der zuletzt beschriebenen, bevorzugten Ausführungsform gebildeten abgeleiteten Basiswert bilden. Alternativ kann die Bildung des Zertifikats auch über die aus dem Originaldatenträger ausgelesenen, von den Authentisierungsdaten verschiedenen Daten erfolgen, falls solche Daten in dem vorstehend als optional beschriebenen Verfahrensschritt ausgelesen worden sind.

Gemäß einer zweiten, sehr allgemeinen Variante kann die vertrauenswürdige Instanz das Ableitungszertifikat als ein auf das Zertifikat über den öffentlichen Schlüssel des Originaldatenträgers verweisendes Attributzertifikat bilden. Hier sind weder ein abgeleiteter Basiswert noch ausgelesene Daten notwendig.

Beide Varianten garantieren, dass eine Instanz, beispielsweise ein Dienstanbieter, welche das Zertifikat im späteren Betrieb des abgeleiteten Datenträgers verifiziert, die Zugehörigkeit des Zertifikats zu dem abgeleiteten Datenträger zweifelsfrei erkennen kann: Gemäß der ersten Variante anhand der für den abgeleiteten Datenträger charakteristischen und eindeutigen Daten, dem abgeleiteten Basiswert oder den ausgelesenen Daten, gemäß der zweiten Variante durch den eindeutigen Verweis auf das Schlüsselzertifikat des öffentlichen Schlüssels des abgeleiteten Datenträgers.

Beide Varianten stimmen dahingehend überein, dass das Ableitungszertifikat kein Schlüsselzertifikat, sondern lediglich ein Attributzertifikat ist. Dieses kann wesentliche Attribute des abgeleiteten Datenträgers angeben, beispielsweise ein Ablaufdatum des abgeleiteten Datenträgers, Beschränkungen des Funktions- und/oder Verfügungsumfangs im Betrieb des abgeleiteten Datenträgers und dergleichen.

Damit sich der abgeleitete Datenträger - entweder noch im Rahmen seiner Herstellung gegenüber der vertrauenswürdigen Instanz zum gesicherten Einbringen der aus dem Originaldatenträger ausgelesenen Daten, zumindest aber im späteren Betrieb gegenüber einem Dienstanbieter - authentisieren kann, müssen die entsprechenden Authentisierungsdaten an den abgeleiteten Datenträger übertragen werden. Diese umfassen, wie erwähnt, zumindest das Ableitungszertifikat und den abgeleiteten geheimen Schlüssel sowie den öffentlichen Schlüssel des Originaldatenträgers samt Schlüsselzertifikat. Die Authentisierungsdaten umfassen zusätzlich einen der Ableitung zuzuordnenden Ableitungsparameter, beispielsweise den vorstehend beschriebenen Basiswert g1.

Die Übertragung der Authentisierungsdaten an den abgeleiteten Datenträger kann auf verschiedene Art und Weise erfolgen.

Gemäß einer ersten Ausführungsform überträgt zunächst der Originaldatenträger den geheimen Schlüssel des abgeleiteten Datenträgers an die vertrauenswürdige Instanz. Die vertrauenswürdige Instanz überträgt dann die gesamten Authentisierungsdaten an den abgeleiteten Datenträger. Wie nachstehend genauer beschrieben, wird der geheime Schlüssel des abgeleiteten Datenträgers vorzugsweise jeweils, d.h. vom Originaldatenträger zur vertrauenswürdigen Instanz und von dort zum abgeleiteten Datenträger, verschlüsselt übertragen. Auch das Übertragen des Ableitungsparameters und/oder anderer Anteile der Authentisierungsdaten kann in verschlüsselter Form vorgesehen sein.

Gemäß einer zweiten Ausführungsform überträgt zunächst die vertrauenswürdige Instanz das Ableitungszertifikat an den Originaldatenträger. Der Originaldatenträger überträgt dann den geheimen Schlüssel des abgeleiteten Datenträgers und das Ableitungszertifikat an den abgeleiteten Datenträger. Dazu wird ein separater, vorzugsweise direkter und gesicherter Datenübertragungskanal zwischen dem Originaldatenträger und dem abgeleiteten Datenträger hergestellt. Die verbleibenden Anteile der Authentisierungsdaten, der öffentlichen Schlüssel sowie das dazugehörige Schlüsselzertifikat und gegebenenfalls der Ableitungsparameter, z.B. der Basiswert, können sowohl von dem Originaldatenträger als auch von der vertrauenswürdigen Instanz an den abgeleiteten Datenträger übertragen werden. Auch hier kann wieder für einzelne oder alle Anteile der Authentisierungsdaten eine Verschlüsselung vor der Übertragung erfolgen.

Eine verschlüsselte Übertragung des geheimen Schlüssels des abgeleiteten Datenträgers von dem Originaldatenträger an den abgeleiteten Datenträger über die vertrauenswürdige Instanz kann beispielsweise wie folgt durchgeführt werden. Der Originaldatenträger erzeugt einen Verschlüsselungsparameter, beispielsweise eine zweite Zufallszahl, und verschlüsselt den geheimen Schlüssel des abgeleiteten Datenträgers mittels des Verschlüsselungsparameters. Im genannten Beispiel kann der geheime Schlüssel zum Verschlüsseln mit der zweiten Zufallszahl beispielsweise derart verknüpft werden, dass aus dem Ergebnis der Verknüpfung für einen Dritten weder die Zufallszahl noch der geheime Schlüssel ableitbar ist. Eine mögliche Verknüpfung ist eine XOR-Verknüpfung.

Der derart verschlüsselte geheime Schlüssel wird dann von dem Originaldatenträger an die vertrauenswürdige Instanz und von dort, in unveränderter Weise, an den abgeleiten Datenträger übertragen. Auf der anderen Seite überträgt der Originaldatenträger den Verschlüsselungsparameter, beispielsweise die zweite Zufallszahl, über einen separaten, vorzugsweise direkten und gesicherten Datenkommunikationskanal an den abgeleiteten Datenträger. Dieser kann dann, in Besitz des Verschlüsselungsparameters, den verschlüsselt übertragenen geheimen Schlüssel entschlüsseln.

Die vorliegende Erfindung betrifft weiterhin ein Verfahren zur Verwendung eines wie vorstehend beschrieben hergestellten abgeleiteten Datenträgers. Dabei erfolgt zumindest ein Schritt des Authentisierens des abgeleiteten Datenträgers gegenüber einem Dienstanbieter unter Verwendung der während der Herstellung an den abgeleiteten Datenträger übertragenen Authentisierungsdaten. Im Rahmen des Authentisierens wird weiterhin das Ableitungszertifikat des abgeleiteten Datenträgers seitens des Dienstanbieters verifiziert. Dabei kann der Dienstanbieter beispielsweise auch ein durch das Ableitungszertifikat in der Regel angegebenes Ablaufdatum des abgeleiteten Datenträgers prüfen. Nur wenn diese Verifikation erfolgreich ist, kann eine weitere Transaktion zwischen dem Dienstanbieter und dem abgeleiteten Datenträger durchgeführt werden.

Der Schritt des Authentisierens des abgeleiteten Datenträgers gegenüber dem Dienstanbieter erfolgt gemäß einer bevorzugten Ausführungsform somit im Wesentlichen analog zum vorstehend spezifisch beschriebenen Authentisieren des abgeleiteten Datenträgers gegenüber der vertrauenswürdigen Instanz. D.h. es wird ein Kommunikationsschlüssel zwischen dem abgeleiteten Datenträger und dem Dienstanbieter vereinbart, vorzugsweise mittels eines Diffie-Hellman-Schlüsselaustauschverfahrens. Die Schlüsselvereinbarung erfolgt dabei auf der Basis des öffentlichen und des geheimen Schlüssels des abgeleiteten Datenträgers sowie eines öffentlichen Sitzungsschlüssels und eines geheimen Sitzungsschlüssels des Dienstanbieters. Der öffentliche Schlüssel des abgeleiteten Datenträgers entspricht, wie erwähnt, dem öffentlichen Schlüssel des Originaldatenträgers. Der geheime Schlüssel des abgeleiteten Datenträgers ist mittels Multiplikation des geheimen Schlüssels des Originaldatenträgers mit einer Zufallszahl gebildet worden. Der öffentliche Sitzungsschlüssel des Dienstanbieters bestimmt sich mittels Exponentiation des Basiswerts mit dem geheimen Sitzungsschlüssel des Dienstanbieters. Der Basiswert ist dabei, wie erwähnt, aus einer Exponentiation der vorgegebenen Primitivwurzel mit dem Reziproken der Zufallszahl, die bereits zur Bildung des abgeleiteten geheimen Schlüssels für den abgeleiteten Datenträger verwendet worden ist, bestimmt worden.

Im Folgenden wird die vorliegende Erfindung mit Bezug auf die beiliegenden Zeichnungen beispielhaft beschrieben. Darin zeigen:

Figur 1    einen Überblick über wesentliche Schritte einer bevorzugten Ausführungsform eines erfindungsgemäßen Verfahrens zum Herstellen und Betreiben eines von einem Originaldatenträger abgeleiteten Datenträgers;

Figur 2    wesentliche Schritte einer Authentisierung des Originaldatenträgers gegenüber einer vertrauenswürdigen Instanz;

Figur 3    im Rahmen der Ableitung und Verschlüsselung eines geheimen Schlüssels für den abgeleiteten Datenträger durchzuführende Schritte;

Figur 4    Schritte zur Übertragung des abgeleiteten Schlüssels;

Figur 5    Schritte zur Vorbereitung des abgeleiteten Datenträgers;

Figur 6    wesentliche Schritte einer Authentisierung des abgeleiteten Datenträgers gegenüber der vertrauenswürdigen Instanz und

Figur 7    wesentliche Schritte einer Authentisierung des abgeleiteten Datenträgers gegenüber einem Dienstanbieter.

Im Folgenden wird eine bevorzugte Ausführungsform eines Verfahrens zum Herstellen eines von einem Originaldatenträger abgeleiteten Datenträgers beschrieben.

Als Originaldatenträger kann ein beliebiges Sicherheitsdokument verwendet werden, welches hinsichtlich der Hardware über eine gewisse Minimalausstattung umfassend einen Speicher, einen Prozessor und eine Datenkommunikationsschnittstelle zur Datenkommunikation mit einer externen Instanz verfügt. Typische Beispiele für einen Originaldatenträger im Sinne der vorliegenden Erfindung sind beispielsweise ein Personalausweis mit eID-Funktionalität, ein Reisepass, eine Signaturkarte und dergleichen.

Der abgeleitete Datenträger, welcher über dieselben minimalen Hardwaregrundlagen wie der Originaldatenträger verfügen sollte, kann beispielsweise auf der Grundlage einer gewöhnlichen Chipkarte oder eines ähnlich ausgebildeten portablen Datenträgers oder Tokens hergestellt werden.

Alternativ kann allerdings auch ein mobiles Endgerät, z.B. ein Mobilfunkendgerät, ein Smartphone, ein Tablet oder dergleichen, eine entsprechend eingerichtete Umgebung bereitstellen, vorzugsweise in Form eines gesicherten, vom gewöhnlichen Betriebssystem des Geräts abgeschirmten Bereichs, beispielsweise in Form eines so genannten "Trusted Execution Environment" (TEE), um die im Rahmen der Herstellung des - dann virtuellen - abgeleiteten Datenträgers von dem Originaldatenträger an den abgeleiteten Datenträger zu übertragenden Objekte, beispielsweise in Form von Daten, Schlüssel, Zertifikaten und Applikationen, aufzunehmen.

Das Herstellungsverfahren kann als Delegationsverfahren verstanden werden. Allgemein wird dabei ein Delegationsobjekt unter Aufsicht eines Delegationsmanagers von dem Originaldatenträger in der Rolle des Delegators an den abgeleiteten Datenträger in der Rolle des Delegenten übertragen oder delegiert.

Ein solches Delegationsobjekt umfasst solche Elemente, welche der Originaldatenträger benötigt, um Transaktionen mit einer dritten Instanz durchzuführen. Eine solche Instanz kann beispielsweise ein beliebiger Dienstanbieter in Internet sein, oder eine Bank, eine Behörde, ein Unternehmen etc. Eine genannte Transaktion kann entsprechend beispielsweise ein Kaufgeschäft über das Internet, das Eröffnen eines Depots, das Einreichen einer Steuererklärung, der Zutritt zu einem Gebäude und ähnliches mehr sein. In der Regel erfordert jede dieser Transaktionen eine Authentisierung des Originaldatenträgers gegenüber der anderen Partei. Dementsprechend umfasst das Delegationsobjekt meist zumindest Authentisierungsschlüssel oder dergleichen. Weiter können Schlüsselzertifikate Teil des Delegationsobjekts sein. Aber auch davon abweichende Daten, beispielsweise den Nutzer des Datenträgers betreffende, persönliche Daten oder sonstige Nutzdaten, Signaturschlüssel etc. können Teil eines Delegationsobjekts sein.

In der Regel ist die Funktionalität des abgeleiteten Datenträgers nach dessen Fertigstellung gegenüber der Funktionalität des Originaldatenträgers eingeschränkt. Eine im Wesentlichen identische Kopie ist eher nicht beabsichtigt, prinzipiell aber möglich. Ein von dem Originaldatenträger abgeleiteter Datenträger soll lediglich dafür hergestellt werden, den Originaldatenträger für eine gewisse Zeitspanne, d.h. bis zu einem vorgegebenen Ablaufdatum, für eine gewisse Aufgabe, beispielsweise zur Authentisierung mit Altersnachweis (d.h. im Sinne eines Personalausweises), nicht aber beispielsweise zusätzlich als Signaturkarte, zu ersetzen.

Es kann vorgesehen sein, dass die von dem Originaldatenträger an den abgeleiteten Datenträger temporär delegierte Funktionalität in dieser Zeit, d.h. zwischen Herstellung des abgeleiten Datenträgers und bis zu dessen Ablaufdatum, also solange der abgeleitete Datenträger anstelle des Originaldatenträgers mit Bezug auf die delegierte Funktionalität verwendet werden kann, auf dem Originaldatenträger selbst deaktiviert wird. Im Delegationsprozess selbst werden dabei entsprechende Zugriffsrechte im Originaldatenträger entsprechend temporär verändert.

Als Delegationsmanager wird eine vertrauenswürdige Instanz, beispielsweise ein so genannter "Trusted Service Manager" dienen. Ein solcher Delegationsmanager kann als unabhängige Instanz betrieben werden oder aber einem speziellen Dienstanbieter angegliedert sein. In der Regel bezieht die vertrauenswürdige Instanz ihre Berechtigung zur nachfolgend beschriebenen Überwachung eines Delegationsprozesses zur Herstellung eines abgeleiteten Datenträgers aus einem letztlich von einer zuständigen staatlichen Stelle verliehenen und verifizierbaren Zertifikat.

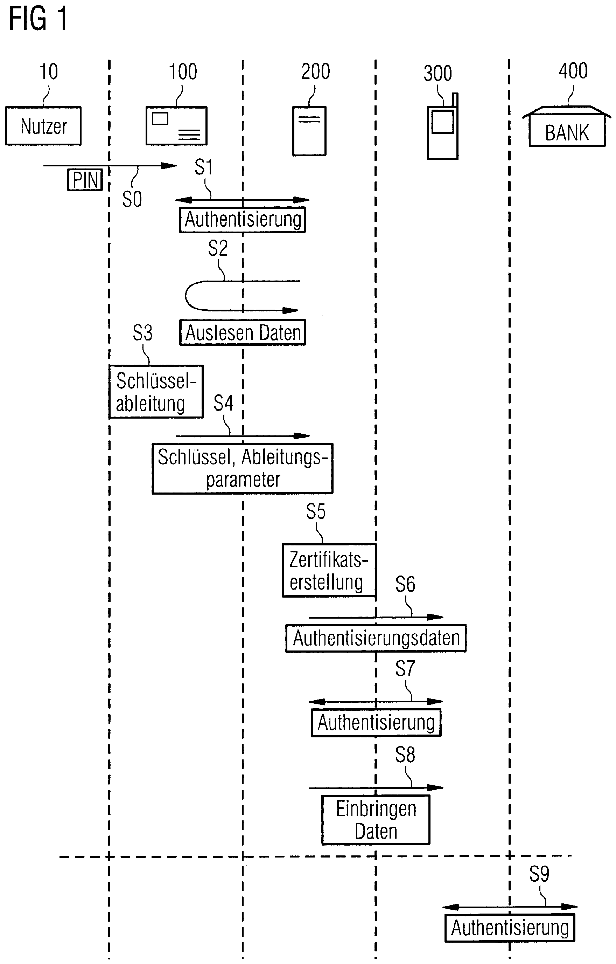

In Fig. 1 sind die wesentlichen Schritte eines Verfahrens zur Herstellung eines abgeleiteten Datenträgers 300 (S0 bis S8) sowie ein erster Schritt (S9) eines Verfahrens zur Verwendung dieses Datenträgers 300 gegenüber einem Dienstanbieter 400 dargestellt.

Ein Nutzer 10 eines Originaldatenträgers 100 möchte einen von dem Originaldatenträger 100 abgeleiteten Datenträger 300 herstellen. Dazu ist eine Datenkommunikation zwischen dem Originaldatenträger 100 und der als Delegationsmanager dienenden vertrauenswürdigen Instanz 200 erforderlich.

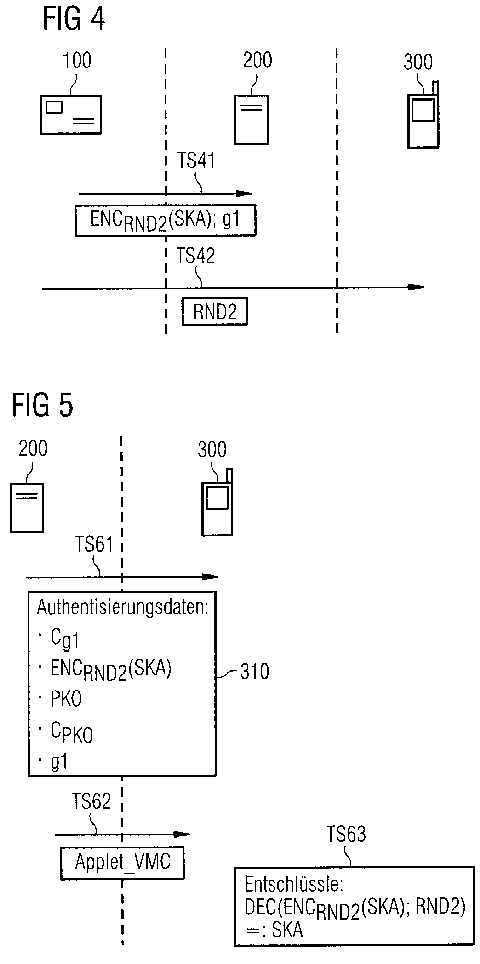

Dazu kann es notwendig sein, den Originaldatenträger 100 über ein geeignetes Lesegerät (nicht gezeigt) mit einem Endgerät (nicht gezeigt), beispielsweise einem Notebook oder dergleichen zu verbinden, welches seinerseits über ein geeignetes Netzwerk (nicht gezeigt), beispielsweise das Internet, mit der vertrauenswürdigen Instanz 200, d.h. mit einem Server dieser Instanz, verbunden wird. In analoger Weise kann eine Datenkommunikationsverbindung zwischen dem abgeleiteten Datenträger 300 und der vertrauenswürdigen Instanz 200 oder einem Dienstanbieter 400 hergestellt werden. Eine gegebenenfalls notwendige Datenkommunikation zwischen dem Originaldatenträger 100 und dem abgeleiten Datenträger 300 (vgl. Fig. 4, TS42) kann auch direkt, beispielsweise kontaktlos über NFC ("near field communication") oder über ein lokales Netzwerk (nicht gezeigt) erfolgen.

Um den Originaldatenträger 100 für das Verfahren betriebsbereit zu machen, ist in Schritt S0 eine Nutzerauthentisierung gegenüber dem Originaldatenträger 100 erforderlich. Dies kann beispielsweise durch Eingabe einer PIN erfolgen.

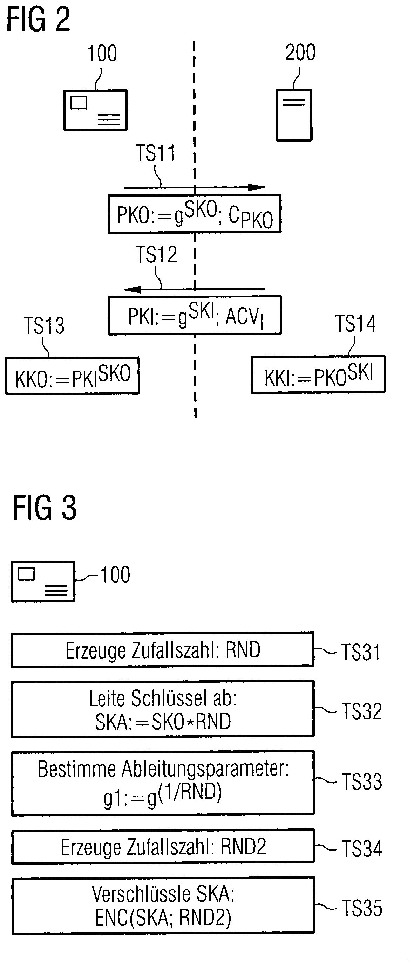

In Schritt S1 authentisiert sich der Originaldatenträger 100 gegenüber der vertrauenswürdigen Instanz 200. Wesentliche Schritte der Authentisierung des Originaldatenträgers 100 gegenüber der vertrauenswürdigen Instanz 200 sind in Fig. 2 dargestellt.

Sowohl der Originaldatenträger 100 als auch die vertrauenswürdige Instanz 200 verfügen jeweils über einen öffentlichen und einen geheimen Schlüssel. Der öffentliche Schlüssel PKO des Originaldatenträgers 100 ist mit einem Schlüsselzertifikat $C_{PKO}$ versehen, welches von der vertrauenswürdigen Instanz 200 geprüft werden kann. Im Rahmen der Authentisierung wird ein geheimer Kommunikationsschlüssel KK vereinbart. Dieser dient dazu, die nachfolgende Datenkommunikation zu verschlüsseln und dadurch gegen Abhören oder Verändern zu sichern.

In einem ersten Teilschritt TS11 überträgt der Originaldatenträger 100 seinen öffentlichen Schlüssel PKO sowie das zugehörige Zertifikat $C_{PKO}$ an die vertrauenswürdige Instanz 200. Diese überträgt im Gegenzug in Teilschritt TS12 ihren öffentlichen Schlüssel PKI sowie ein nachfolgend genauer beschriebenes Berechtigungszertifikat AVC$_I$ an den Originaldatenträger 100. Die jeweiligen öffentlichen Schlüssel ergeben sich, wie in Fig. 2 angegeben, durch Exponentiation einer vorgegebenen Basis, einer geeigneten Primitivwurzel g, mit dem jeweiligen geheimen Schlüssel. Mathematische Details werden hier und im Folgenden ausgelassen, wie beispielsweise eine modulare Reduktion des Exponentiationsergebnisses modulo einer geeignet gewählten Primzahl p, welche, wie die Basis g, zu einer Menge beiden Parteien vorab bekannter Verfahrensparameter gehört. D.h. für den Originaldatenträger 100 gilt PKO := g^SKO, für die vertrauenswürdige Instanz gilt PKI := g^SKI.

In den Teilschritten TS13 und TS14 berechnen die beiden Parteien jeweils auf ihrer Seite den Kommunikationsschlüssel dadurch, dass der von der anderen Partei jeweils empfangene öffentliche Schlüssel mit dem eigenen geheimen Schlüssel exponentiert wird. Beide Parteien berechnen auf diese Weise denselben Kommunikationsschlüssel, denn es gilt:

$$KKO := PKI^{\wedge}SKO = (g^{\wedge}SKI)^{\wedge}SKO = g^{\wedge}(SKI*SKO)$$

$$= g^{\wedge}(SKO*SKI) \qquad = (g^{\wedge}SKO)^{\wedge}(SKI)$$

$$= PKO^{\wedge}SKI$$

$$=: KKI$$

Eine Authentisierung der vertrauenswürdigen Instanz 200 gegenüber dem Originaldatenträger 100 kann zusätzlich und unabhängig von den in Fig. 2 gezeigten Schritten, beispielsweise unter Verwendung weiterer geeigneter Schlüssel und mittels eines challenge-response-Verfahrens, erfolgen.

Nach erfolgreicher Authentisierung kann nun die vertrauenswürdige Instanz 200 in Schritt S2 Daten aus dem Originaldatenträger 100 - über den mittels des Kommunikationsschlüssels gesicherten Kanal - auslesen. Dazu legt die vertrauenswürdige Instanz 200 dem Originaldatenträger 100 das Berechtigungszertifikat ACV$_I$ vor. Dieses Zertifikat kann von einer staatlichen Stelle signiert sein und weist die Berechtigung der vertrauenswürdigen Instanz 200 nach, Daten aus dem Originaldatenträger 100 auslesen zu dürfen. Nachdem der Originaldatenträger 100 das Zertifikat ACV$_I$ geprüft hat, kann die vertrauenswürdige Instanz 200 die Daten auslesen.

In Schritt S3 leitet der Originaldatenträger 100 einen geheimen Schlüssel SKA für den abgeleiteten Datenträger 300 ab. Dazu erzeugt der Originaldatenträger 100 in einem ersten Teilschritt TS31 eine erste Zufallszahl RND. Der geheime Schlüssel SKA für den abgeleiteten Datenträger 300 ergibt sich in Teilschritt TS32 als Produkt des geheimen Schlüssels SKO des Originaldatenträgers 100 mit der Zufallszahl RND, d.h. es gilt SKA:= SKO*RND.

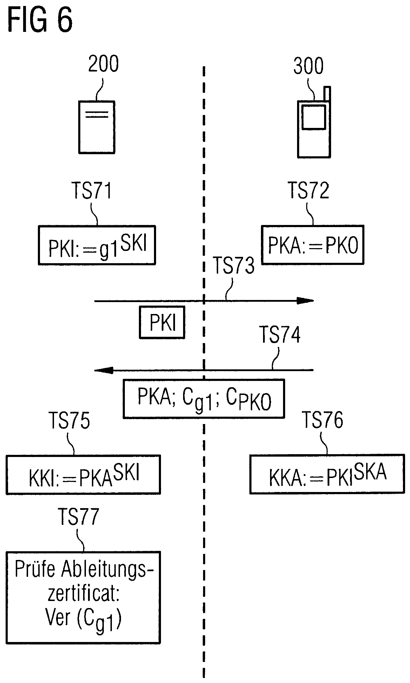

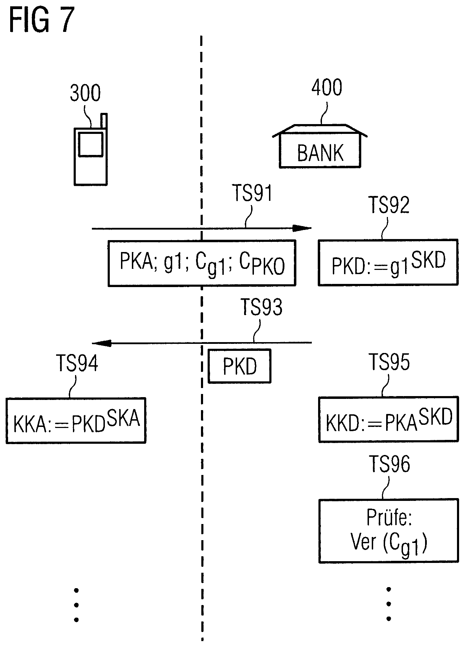

In einem weiteren Teilschritt TS33 erzeugt der Originaldatenträger 100 einen Ableitungsparameter g1, welcher die Ableitung des geheimen Schlüssels SKA für das restliche Verfahren und die anderen beteiligten Kommunikationspartner (vgl. Fig. 6, TS71; Fig. 7, TS92) nachvollziehbar macht, ohne dass der geheime Schlüssel SKA dadurch öffentlich wird.

Der Ableitungsparameter berechnet sich in dem vorliegend beschriebenen Beispiel aus der Primitivwurzel g, indem diese mit dem Reziproken der Zufallszahl RND exponentiert wird. Auch hier sind die dem Fachmann bekannten mathematischen Details, wie beispielsweise ein Reziprokes hier zu verstehen ist und gebildet wird und welche modularen Reduktionen mit welchen Primzahlen zusätzlich erforderlich sind, ausgelassen. Eine detaillierte Beschreibung hier beschriebener (Anteile von) Authentisierungsverfahren auf der Basis (modifizierter) Diffie-Hellman-Verfahren findet sich beispielsweise in dem Entwurf zur Europäischen Norm EN 14890-1 (STD Version 2.2) im Anhang C.6.1.

Der Originaldatenträger 100 löscht schließlich die Zufallszahl RND.

Die weiteren Teilschritte TS34 und TS35 zeigen optionale Verfahrensschritte zum Verschlüsseln des abgeleiteten Schlüssels SKA, bevor dieser (vgl. Fig. 1, Schritt S4) an die vertrauenswürdige Instanz übertragen wird. Der Originaldatenträger 100 erzeugt dazu eine zweite Zufallszahl RND2 als Verschlüsselungsparameter (TS34) und verschlüsselt den Schlüssel SKA mit Hilfe des Verschlüsselungsparameters RND2 in TS35. Dies kann beispielsweise dadurch erfolgen, dass der Schlüssel SKA und der Verschlüsselungsparameter RND2 XOR-verknüpft werden.

Eine solche Verschlüsselung des Schlüssels SKA kann aber auch unterbleiben. Dies gilt insbesondere, da der Datenkommunikationskanal zwischen dem Originaldatenträger 100 und der vertrauenswürdigen Instanz 200 gesichert ist und die vertrauenswürdige Instanz 200 durch ihre Stellung und Rolle im Gesamtsystem als Quelle einer Korruption des abgeleiteten Datenträgers 300 nicht in Frage kommt.

Wie in Fig. 4 dargestellt, wird der mittels RND2 verschlüsselte abgeleitete Schlüssel SKA zusammen mit dem Ableitungsparameter g1, welcher gegebenenfalls auch verschlüsselt werden kann, in Teilschritt TS41 von dem Originaldatenträger 100 an die vertrauenswürdige Instanz 200 übertragen. In einem weiteren Teilschritt TS42 überträgt der Originaldatenträger 100 den Verschlüsselungsparameter RND2 an den abgeleiteten Datenträger 300. Dies geschieht über einen separaten Datenkommunikationskanal, der vorzugsweise ebenfalls in geeigneter Weise gesichert ist.

Die vertrauenswürdige Instanz 200 bildet in Schritt S5 ein Ableitungszertifikat. In der beschriebenen Ausführungsform wird dieses Zertifikat, welches in der Regel als Attributzertifikat ausgestaltet ist, über den Ableitungsparameter g1 gebildet und daher mit $C_{g1}$ bezeichnet. Alternativ könnte das Ableitungszertifikat beispielsweise auch über die in Schritt S2 ausgelesenen Daten gebildet werden oder als reines Attributzertifikat, welches eindeutig auf das Schlüsselzertifikat $C_{PKO}$ verweist.

Wie in Fig. 5 gezeigt, ist das Ableitungszertifikat $C_{g1}$ ein Bestandteil der Authentisierungsdaten 310, die in Schritt S6 bzw. Teilschritten TS61 von der vertrauenswürdigen Instanz 200 an den abgeleiteten Datenträger 300 übertragen werden. Im beschriebenen Beispiel umfassen die Authentisierungsdaten 310 neben dem Ableitungszertifikat $C_{g1}$ den (verschlüsselten) geheimen Schlüssel des abgeleiteten Datenträgers 300, den dazugehörigen Ableitungsparameter g1 (gegebenenfalls ebenfalls verschlüsselt), den öffentlichen Schlüssel PKO des Originaldatenträgers sowie das diesem zugeordnete Schlüsselzertifikat $C_{PKO}$.

Im einem prinzipiell von der Übertragung der Authentisierungsdaten 310 unabhängigen Teilschritt TS62, welcher auch zu einem geeigneten anderen, insbesondere früheren Zeitpunkt des Verfahrens hätte erfolgen können, überträgt die vertrauenswürdige Instanz 200 diejenigen Grundfunktionalitäten und -strukturen an den abgeleiteten Datenträger 300, welche dieser benötigt, um anstelle des Originaldatenträgers 100 eingesetzt werden zu können, und die unabhängig von dem Originaldatenträger 100 sind. Dies betrifft beispielsweise ein Dateisystem, kryptographische Funktionalitäten, Funktionalitäten zur Datenkommunikation, Anteile eines minimalen Betriebssystems, falls noch nicht vorhanden, und dergleichen. In Fig. 6 ist dies zusammenfassend mit dem Begriff Applet_VMC bezeichnet worden, wobei VMC für "Virtual Smart Card" steht.

In Teilschritt TS63 entschlüsselt der abgeleitete Datenträger 300 den mit den Authentisierungsdaten verschlüsselt empfangenen geheimen Schlüssel SKA mittels des in Teilschritt TS42 (vgl. Fig. 4) empfangenen Verschlüsselungsparameters RND2.

Die Authentisierungsdaten 310 können seitens des abgeleiteten Datenträgers 300 schließlich in die dafür vorgesehenen Speicherbereiche in dem Datenträger 300 gespeichert werden.

Wesentliche Schritte einer im Verfahrensablauf nun folgenden Authentisierung des abgeleiteten Datenträgers 300 gegenüber der vertrauenswürdigen Instanz 200 sind in Fig. 6 angegeben. Ein Vergleich mit den in Fig. 2 gezeigten Schritten, welche eine Authentisierung des Originaldatenträgers 100 gegenüber der vertrauenswürdigen Instanz 200 beschreiben, zeigt eine geringfügige, aber wesentliche Abweichung im Rahmen des zur Vereinbarung des Kommunikationsschlüssels verwendeten Protokolls. In einem gewöhnlichen Diffie-Hellman-Verfahren, wie es in Fig. 2 illustriert ist, wird der öffentliche Schlüssel jeder Partei jeweils durch Exponentiation einer vorgegebenen Primitivwurzel g mit dem jeweils zugehörigen geheimen Schlüssel gebildet (vgl. Fig. 2, TS 11, TS12).

In der abgeleiteten, mit Bezug auf Fig. 6 gezeigten Variante des Diffie-Hellman-Verfahrens ist dies nicht mehr der Fall. Nun werden die jeweiligen öffentlichen Schlüssel jeweils durch Exponentiation des Basiswertes g1 (anstelle von g) mit dem jeweils zugehörigen geheimen Schlüssel gebildet (vgl. Fig. 6, TS 71, TS72). Die in TS72 angegebene Gleichheit des öffentlichen Schlüssels des abgeleiteten Datenträgers PKA mit den öffentlichen Schlüssel PKO des Originaldatenträgers 100 ergibt sich wie folgt:

$$\begin{aligned}
PKA \quad &:= g1{\wedge}(SKA) \\
&= g{\wedge}(1/RND){\wedge}(SKA) \\
&= g{\wedge}((1/RND){*}RND{*}SKO) \\
&= g{\wedge}(SKO) = PKO.
\end{aligned}$$

Der restliche Ablauf des Verfahrens, welcher in den Teilschritten TS73 bis TS76 angegeben ist, gleicht dem Verfahren aus Fig. 2. Die wie vorstehend beschriebenen erzeugten öffentlichen Schlüssel werden der jeweils anderen Partei zur Verfügung gestellt (vgl. TS73, TS74). Der öffentliche Schlüssel PKA des abgeleiteten Datenträgers 300 kann seitens der vertrauenswürdigen Instanz anhand des Schlüsselzertifikats $C_{PKO}$ verifiziert werden. Zur Bestimmung des Kommunikationsschlüssels wird jeweils der empfangene öffentliche Schlüssel der anderen Partei mit dem eigenen Schlüssel exponentiert (vgl. TS75, TS76). Eine Übereinstimmung der derart bestimmten Kommunikationsschlüssel ergibt sich wie folgt: Der abgeleitete Datenträger 300 berechnet

$$KKA := PKI^{\wedge}SKA$$

$$= (g1^{\wedge}(SKI))^{\wedge}SKA$$

$$= (g^{\wedge}(1/RND)^{\wedge}(SKI))^{\wedge}SKA$$

$$= g^{\wedge}((1/RND)*SKI*SKO*RND)$$

$$= g^{\wedge}(SKI*SKO).$$

Die vertrauenswürdige Instanz 200 ihrerseits berechnet

$$KKI := PKA^{\wedge}SKI$$

$$= PKO^{\wedge}SKI$$

$$= (g^{\wedge}SKO)^{\wedge}(SKI)$$

$$= g^{\wedge}(SKI*SKO) = KKA.$$

In Teilschritt TS77 schließlich kann die vertrauenswürdige Instanz 200 noch das von ihr in Schritt S5 erstellte und im Rahmen der Übertragung der Authentisierungsdaten 310 in Schritt S6 an den abgeleiteten Datenträger 300 übertragene Ableitungszertifikat $C_{g1}$ prüfen.

Damit ist die Authentisierung des abgeleiteten Datenträgers 300 gegenüber der vertrauenswürdigen Instanz 200 abgeschlossen.

Ist dieser Vorgang erfolgreich verlaufen, so überträgt nun die vertrauenswürdige Instanz in Schritt S8 die in Schritt S2 aus dem Originaldatenträger 100 ausgelesenen Daten an den abgeleiteten Datenträger 300. Damit ist die Herstellung des abgeleiteten Datenträgers 300 abgeschlossen und dieser kann im normalen Betrieb, anstelle des Originaldatenträgers 100, eingesetzt werden. Ein solcher Einsatz wird abschließend mit Bezug auf Fig. 7 illustriert.

Ein Verfahren zur Verwendung des abgeleiteten Datenträgers 300 gegenüber einem Dienstanbieter 400 umfasst das Authentisieren des abgeleiteten Datenträgers 300 gegenüber dem Dienstanbieter 400. Dazu verwendet der abgeleitete Datenträger 300 die während der Herstellung an den abgeleiteten Datenträger 300 übertragenen Authentisierungsdaten 310 (vgl. Fig. 5, TS61).

Wie ein Vergleich der Teilschritte TS91 bis TS95 aus Fig. 7 mit den Teilschritten TS71 bis TS76 in Fig. 6 zeigt, verläuft die Authentisierung des abgeleiteten Datenträgers 300 gegenüber dem Dienstanbieter 400 analog, d.h. nach demselben Protokoll und unter Verwendung derselben Authentisierungsdaten 310, wie die Authentisierung des abgeleiteten Datenträgers 300 gegenüber der vertrauenswürdigen Instanz 200: Es wird ein Kommunikationsschlüssel (KKA, KKD, vgl. TS94; TS95) zwischen dem abgeleiteten Datenträger 300 und dem Dienstanbieter 400 mittels der bereits mit Bezug auf Fig. 6 detailliert beschriebenen Variante des Diffie-Hellman-Schlüsselaustauschverfahrens vereinbart. Dies geschieht auf der Basis des öffentlichen PKA und des geheimen Schlüssels SKA des abgeleiteten Datenträgers 300 sowie eines öffentlichen Sitzungsschlüssels PKD und eines geheimen Sitzungsschlüssels SKD des Dienstanbieters 400. Der öffentliche Schlüssel PKA des abgeleiteten Datenträgers ist bereits während der Herstellung des abgeleiteten Datenträgers 300 mittels Exponentiation des Basiswerts g1 mit dem geheimen Schlüssel SKA des abgeleiteten Datenträgers 300 bestimmt worden. Der geheime Schlüssel SKA des abgeleiteten Datenträgers 300 ergab sich, ebenfalls bereits während der Herstellung des Datenträgers 300, mittels Multiplikation des geheimen Schlüssels SKO des Originaldatenträgers 100 mit der Zufallszahl RND. Daher stimmt auch, wie vorstehend ausgeführt, der öffentliche Schlüssel PKA des abgeleiteten Datenträgers 300 mit dem öffentlichen Schlüssel PKO des Originaldatenträgers 100 überein. So ist es möglich, dass der öffentliche Schlüssel PKA des abgeleiteten Datenträgers 300 mit dem Originalschlüsselzertifikat $C_{PKO}$ des öffentlichen Schlüssels PKO des Originalsdatenträgers 100 versehen ist (vgl. TS91). Der Dienstanbieter 400 prüft dieses Zertifikat $C_{PKO}$ im Rahmen der Authentisierung.

Der öffentliche Sitzungsschlüssel PKD des Dienstanbieters 400 wird mittels Exponentiation des Basiswerts g1 mit dem geheimen Sitzungsschlüssel SKD des Dienstanbieters 400 bestimmt (vgl. TS92).

In einem weiteren Schritt (vgl. TS96) verifiziert der Dienstanbieter 400 das Ableitungszertifikat $C_{g1}$. Dadurch kann dieser insbesondere prüfen, ob der abgeleitete Datenträger 300 noch gültig ist, d.h. ob dessen Ablaufdatum noch nicht erreicht ist. Weiter können für den Dienstanbieter 400 eventuelle Beschränkungen der Funktionalität und/oder des Verfügungsrahmens des abgeleiteten Datenträgers 300 an dem Ableitungszertifikat $C_{g1}$ abgelesen werden.

Abhängig von der Art der Transaktion, welche zwischen abgeleitetem Datenträger 300 und Dienstanbieter 400 durchgeführt werden soll, können auf eine erfolgreiche Authentisierung weitere (in Fig. 7 nicht gezeigte) Schritte folgen, beispielsweise ein Auslesen von Daten aus dem abgeleiteten Datenträger 300 durch den Dienstanbieter 400. Dazu müsste der Dienstanbieter 400 dann in der Regel ein entsprechendes Berechtigungszertifikat vorlegen, welches durch den abgeleiteten Datenträger 300 geprüft werden könnte (vgl. die analoge Situation zwischen vertrauenswürdiger Instanz 200 und Originaldatenträger 100 während der Herstellung des abgeleiteten Datenträgers 300; Fig. 2, TS12; Übertragung des Berechtigungszertifikats $ACV_I$ durch die vertrauenswürdige Instanz 200 an den Originaldatenträger 100).

Im Folgenden werden Aspekte der vorliegenden Lösung aufgeführt. Diese Aspekte haben keinen Einfluss auf den Schutzumfang, welcher ausschließlich durch die Ansprüche definiert wird. Das vorliegende Verfahren zur Erstellung einer von einem Originaldatenträger (100) abgeleiteten Authentisierungsinstanz (300), wobei der Originaldatenträger ein für den Originaldatenträger individuelles Schlüsselpaar, welches einen öffentlichen Schlüssel (PKO) und einen geheimen Schlüssel (SKO) des Originaldatenträgers (100) umfasst, sowie ein Zertifikat ($C_{PKO}$) über den öffentlichen Schlüssel (PKO) des Originaldatenträgers (100) aufweist, umfasst die Schritte:

- Ableiten (S3) eines geheimen Schlüssels (SKA) für die abgeleitete Authentisierungsinstanz (300) aus dem geheimen Schlüssel (SKO) des Originaldatenträgers (100) durch den Originaldatenträger (100);
- Bilden (TS33, S5) von Ableitungsdaten (g1, $C_{g1}$) für die abgeleitete Authentisierungsinstanz (300);
- Übertragen (S6) von Authentisierungsdaten (310) an die abgeleitete Authentisierungsinstanz (300), wobei die Authentisierungsdaten die Ableitungsdaten (g1, $C_{g1}$), das Zertifikat ($C_{PKO}$) des öffentlichen Schlüssel (PKO) des Originaldatenträgers (100) sowie ein abgeleitetes Schlüsselpaar aufweisen, welches den abgeleiteten geheimen Schlüssel (SKA) und den öffentlichen Schlüssel (PKO) des Originaldatenträgers (100) umfasst.

Gemäß einem weiteren Aspekt kann das Verfahren ferner gekennzeichnet sein durch den im Rahmen des Authentisierens des Originaldatenträgers (100) gegenüber der vertrauenswürdigen Instanz (200) durchgeführten Schritt des Vereinbarens eines Kommunikationsschlüssels (KKO; KKI) zwischen dem Originaldatenträger (100) und der vertrauenswürdigen Instanz (200), vorzugsweise mittels eines Diffie-Hellman-Schlüsselaustauschverfahrens, auf der Basis des öffentlichen (PKO) und des geheimen Schlüssels (SKO) des Originaldatenträgers (100) sowie eines öffentlichen Sitzungsschlüssels (PKI) und eines geheimen Sitzungsschlüssels (SKI) der vertrauenswürdigen Instanz (200), wobei der öffentliche Schlüssel (PKO) des Originaldatenträgers (100) mittels Exponentiation einer vorgegebenen Primitivwurzel (g) mit dem geheimen Schlüssel (SKO) des Originaldatenträgers (100) bestimmt wird und der öffentliche Sitzungsschlüssel (PKI) der vertrauenswürdigen Instanz (200) mittels Exponentiation der vorgegebenen Primitivwurzel (g) mit dem geheimen Sitzungsschlüssel (SKI) der vertrauenswürdigen Instanz (200) bestimmt wird.

Gemäß einem weiteren Aspekt kann das Verfahren ferner dadurch gekennzeichnet sein, dass zum Übertragen der Authentisierungsdaten (310) an die abgeleitete Authentisierungsinstanz (300) der Originaldatenträger (100) den geheimen Schlüssel (SKA) der abgeleiteten Authentisierungsinstanz (300) an die vertrauenswürdige Instanz (200) überträgt (TS41) und die vertrauenswürdige Instanz (200) dann die Authentisierungsdaten (310) an die abgeleiteten Authentisierungsinstanz (300) überträgt (TS61).

Dieser Aspekt kann ferner dadurch gekennzeichnet sein, dass der geheime Schlüssel (SKA) der abgeleiteten Authentisierungsinstanz (300) verschlüsselt übertragen wird und der Originaldatenträger (100) den zugehörigen Entschlüsselungsschlüssel (RND2) direkt an die abgeleitete Authentisierungsinstanz (300) überträgt.

Gemäß einem weiteren Aspekt kann das Verfahren ferner dadurch gekennzeichnet sein, dass zum Übertragen der Authentisierungsdaten (310) an die abgeleiteten Authentisierungsinstanz (300) die vertrauenswürdige Instanz (200) die Ableitungsdaten ($C_{g1}$) an den Originaldatenträger (100) überträgt und der Originaldatenträger (100) den geheimen Schlüssel (SKA) der abgeleiteten Authentisierungsinstanz (300) und Ableitungsdaten ($C_{g1}$) an die abgeleitete Authentisierungsinstanz (300) überträgt.

Das vorliegende Verfahren zur Authentisierung einer Authentisierungsinstanz (300) gegenüber einem Authentisierungspartner (200, 400), vorzugsweise mittels eines Diffie-Hellman-Schlüsselaustauschverfahrens, auf der Basis eines öffentlichen (PKO) und eines geheimen Schlüssels (SKA) der Authentisierungsinstanz (300) sowie eines öffentlichen Sitzungsschlüssels (PKD) und eines geheimen Sitzungsschlüssels (SKD) des Authentisierungspartners (200,400), wobei die Authentisierungsinstanz (300) eine von einem Originaldatenträger (100) abgeleitete Authentisierungsinstanz (300) ist, wobei der geheime Schlüssel (SKA) der abgeleiteten Authentisierungsinstanz (300) durch aus einem geheimen datenträgerindividuellen Schlüssels (SKO) des Originaldatenträgers (100) mit einem Ableitungswert (RND) angeleitet wurde, der öffentliche Schlüssel (PKA) der abgeleiteten Authentisierungsinstanz (300) dem öffentlichen Schlüssel des Originaldatenträgers (100) entspricht und die Authentisierungsinstanz (300) dem Authentisierungspartner (200,400) einen aus dem Ableitungswert gebildeten Ableitungsparameter (g1) bereitstellt (TS91), und der öffentliche Sitzungsschlüssel (PKD) des Authentisierungspartners (200, 400) aus dem geheimen Sitzungsschlüssel (SKD) und dem Ableitungsparameter (g1) gebildet wird (TS92).

Gemäß einem weiteren Aspekt kann dieses Verfahren dahin weitergebildet sein, dass der geheime Schlüssel (SKA) der abgeleiteten Authentisierungsinstanz (300) mittels Multiplikation des geheimen Schlüssels (SKO) des Originaldatenträgers (100) mit einer Zufallszahl (RND) als Ableitungswert gebildet wurde und der öffentliche Sitzungsschlüssel (PKD) des Authentisierungspartners (200, 400) mittels Exponentiation eines Basiswerts (g1) als Ableitungsparameter mit dem geheimen Sitzungsschlüssel (SKD) des Authentisierungspartners (200, 400) bestimmt wird.

Gemäß einem weiteren Aspekt kann das Verfahren oder der Aspekt weitergebildet sein, durch einen Schritt des Vereinbarens eines Kommunikationsschlüssels (KKA; KKD) zwischen der abgeleiteten Authentisierungsinstanz (300) und dem Authentisierungspartner (200, 400).

## Patentansprüche

1. Verfahren zur Erstellung einer von einem Originaldatenträger (100) abgeleiteten Authentisierungsinstanz (300), wobei der Originaldatenträger ein für den Originaldatenträger individuelles Schlüsselpaar, welches einen öffentlichen Schlüssel (PKO) und einen geheimen Schlüssel (SKO) des Originaldatenträgers (100) umfasst, sowie ein Zertifikat ($C_{PKO}$) über den öffentlichen Schlüssel (PKO) des Originaldatenträgers (100) aufweist, umfassend die Schritte:

   - Ableiten (S3) eines geheimen Schlüssels (SKA) für die Authentisierungsinstanz (300), aus dem geheimen Schlüssel (SKO) des Originaldatenträgers (100) mit einem Ableitungswert (RND) durch den Originaldatenträger (100);
   - Bilden (TS33, S5) von Ableitungsdaten (g1, $C_{g1}$) aus dem Ableitungswert (RND) für die abgeleitete Authentisierungsinstanz (300);
   - Übertragen (S6) von Authentisierungsdaten (310) an die abgeleitete Authentisierungsinstanz (300); wobei die Authentisierungsdaten die Ableitungsdaten (g1, $C_{g1}$), das Zertifikat ($C_{PKO}$) des öffentlichen Schlüssels (PKO) des Originaldatenträgers (100) sowie ein abgeleitetes Schlüsselpaar aufweisen, welches den abgeleiteten geheimen Schlüssel (SKA) und den öffentlichen Schlüssel (PKO) des Originaldatenträgers (100) umfasst.

2. Verfahren nach Anspruch 1 **dadurch gekennzeichnet, dass** der öffentliche Schlüssel des Originaldatenträgers (100) in der abgeleiteten Authentisierungsinstanz (300) vorgesehen ist, um im Rahmen einer Authentisierung mit der abgeleiteten Authentisierungsinstanz (300) als der öffentliche Schlüssel (PKO) der abgeleiteten Authentisierungsinstanz (300) behandelt zu werden.

3. Verfahren nach Anspruch 1 oder 2 **dadurch gekennzeichnet, dass** das Schlüsselpaar des Originaldatenträgers (100) für eine Authentisierung nach einem ersten Authentisierungsprotokoll vorgesehen ist und das Schlüsselpaar der abgeleiteten Authentisierungsinstanz (300) für eine Authentisierung nach einem abgeleiteten Authentisierungsprotokoll vorgesehen ist, in welchem unveränderte Schritte des ersten Authentisierungsprotokolls mit dem öffentlichen Schlüssel (PKO) des Originaldatenträgers ausgeführt werden.

4. Verfahren nach einem der vorhergehenden Ansprüche, **gekennzeichnet durch** die weiteren Schritte:

   - Auslesen (S2) von Daten aus dem Originaldatenträger (100) durch eine vertrauenswürdige Instanz (200) nach einem Authentisieren (S1) des Originaldatenträgers (100) gegenüber der vertrauenswürdigen Instanz (200);
   - Authentisieren (S7) der abgeleiteten Authentisierungsinstanz (300) gegenüber der vertrauenswürdigen Instanz (200) unter Verwendung der übertragenen Authentisierungsdaten (310); und
   - Übertragen (S8) der aus dem Originaldatenträger (100) ausgelesenen Daten an die abgeleitete Authentisierungsinstanz (300) durch die vertrauenswürdige Instanz (200).

5. Verfahren nach einem der vorhergehenden Ansprüche, **dadurch gekennzeichnet, dass** der Originaldatenträger (100) den geheimen Schlüssel (SKA) für die abgeleitete Authentisierungsinstanz (300) aus dem geheimen Schlüssel (SKO) des Originaldatenträgers (100) unter Verwendung einer Zufallszahl (RND) als der Ableitungswert (RND) ableitet (TS32).

6. Verfahren nach einem der vorhergehenden Ansprüche, **dadurch gekennzeichnet, dass** als Ableitungsdaten (Cg1) ein Zertifikat gebildet wird.

7. Verfahren nach Anspruch 6, **dadurch gekennzeichnet, dass** das Ableitungszertifikat ($C_{g1}$) über einen von dem Originaldatenträger (100) gebildeten abgeleiteten Basiswert (g1) und/oder über aus dem Originaldatenträger (100) ausgelesene Daten gebildet wird.

**8.** Verfahren nach Anspruch 6 oder 7, **dadurch gekennzeichnet, dass** Ableitungszertifikat ($C_{g1}$) als auf das Zertifikat ($C_{PKO}$) über den öffentlichen Schlüssel (PKO) des Originaldatenträgers (100) verweisendes Attributzertifikat gebildet wird.

**9.** Verfahren nach einem der vorhergehenden Ansprüche, **dadurch gekennzeichnet, dass** die Ableitungsdaten (Cg1) eine Nutzungsbeschränkung für die abgeleitete Authentisierungsinstanz (300) umfassen.

**10.** Verfahren nach einem der vorhergehenden Ansprüche, **dadurch gekennzeichnet, dass** der Originaldatenträger (100) einen Ableitungsparameter (g1) bestimmt (TS33) und an die vertrauenswürdige Instanz überträgt (S4), welche zumindest einen Teil der Ableitungsdaten (Cg1) bildet (S5).

**11.** Verfahren nach einem der vorhergehenden Ansprüche, **dadurch gekennzeichnet, dass** der Originaldatenträger (100) einen abgeleiteten Basiswert (g1) mittels einer Exponentiation der vorgegebenen Primitivwurzel (g) mit dem Reziproken der Zufallszahl (RND) bildet und an die vertrauenswürdige Instanz (200) überträgt, welche dann ein Anteil der an die abgeleitete Authentisierungsinstanz (300) zu übertragenden Authentisierungsdaten (310) sind.

**12.** Verfahren nach einem der vorhergehenden Ansprüche, **gekennzeichnet durch,** den im Rahmen des Authentisierens der abgeleiteten Authentisierungsinstanz (300) gegenüber einem Authentisierungspartner (200, 400) durchgeführten Schritt des Vereinbarens eines Kommunikationsschlüssels (KKI; KKA) zwischen der abgeleiteten Authentisierungsinstanz (300) und dem Authentisierungspartner (200, 400) auf der Basis des öffentlichen (PKO) und des geheimen Schlüssels (SKA) der abgeleiteten Authentisierungsinstanz (300) sowie eines öffentlichen Sitzungsschlüssels (PKI) und eines geheimen Sitzungsschlüssels (SKI) des Authentisierungspartners (200, 400), wobei der öffentliche Sitzungsschlüssel (PKI) der vertrauenswürdigen Instanz (200) mittels Exponentiation des Basiswerts (g1) mit dem geheimen Sitzungsschlüssel (SKI) des Authentisierungspartners (200, 400) bestimmt wird.

**13.** Verfahren zur Authentisierung einer Authentisierungsinstanz (300) gegenüber einem Authentisierungspartner (200, 400) auf der Basis eines öffentlichen (PKO) und eines geheimen Schlüssels (SKA) der Authentisierungsinstanz (300) sowie eines öffentlichen Sitzungsschlüssels (PKD) und eines geheimen Sitzungsschlüssels (SKD) des Authentisierungspartners (200, 400),
wobei die Authentisierungsinstanz (300) eine von einem Originaldatenträger (100) abgeleitete Authentisierungsinstanz (300) ist,
wobei der geheime Schlüssel (SKA) der abgeleiteten Authentisierungsinstanz (300) durch aus einem geheimen datenträgerindividuellen Schlüssels (SKO) des Originaldatenträgers (100) mit einem Ableitungswert (RND) abgeleitet wurde, der öffentliche Schlüssel (PKA) der abgeleiteten Authentisierungsinstanz (300) dem öffentlichen Schlüssel des Originaldatenträgers (100) entspricht und die Authentisierungsinstanz (300) dem Authentisierungspartner (200,400) einen aus dem Ableitungswert gebildeten Ableitungsparameter (g1) bereitstellt (TS91), und
der öffentliche Sitzungsschlüssel (PKD) des Authentisierungspartners (200, 400) aus dem geheimen Sitzungsschlüssel (SKD) und dem Ableitungsparameter (g1) gebildet wird (TS92).

**14.** Portabler Datenträger (100), umfassend einen Speicher, einen Prozessor und eine Datenkommunikationsschnittstelle zur Datenkommunikation mit einer externen Instanz (200; 300), **dadurch gekennzeichnet, dass** der Datenträger (100) eingerichtet ist, in der Rolle des Originaldatenträgers (100) zusammen mit einer dazu eingerichteten, vertrauenswürdigen Instanz (200) ein Verfahren nach einem der Ansprüche 1 bis 12 zur Erstellung einer abgeleiteten Authentisierungsinstanz (300) durchzuführen.

**15.** System, umfassend einen Datenträger (100) nach Anspruch 14 als Originaldatenträger (100) und eine vertrauenswürdige Instanz (200), **dadurch gekennzeichnet, dass** die vertrauenswürdige Instanz (200) eingerichtet ist, eine von dem Originaldatenträger (100) abgeleiteten Authentisierungsinstanz (300) in einem Verfahren nach einem der Ansprüche 1 bis 12 zu erstellen.

**Claims**

**1.** A method for creating an authentication entity (300) derived from an original data carrier (100), wherein the original data carrier has firstly a key pair that is individual to the original data carrier and comprises a public key (PKO) and a secret key (SKO) of the original data carrier (100), and secondly a certificate ($C_{PKO}$) for the public key (PKO) of the original data carrier (100), comprising the steps of:

deriving (S3) a secret key (SKA) for the authentication entity (300) from the secret key (SKO) of the original data carrier (100) with an derivation value (RND) by the original data carrier (100);

forming (TS33, S5) derivation data (g1, $C_{g1}$) from the derivation value (RND) for the derived authentication entity (300);

transferring (S6) authentication data (310) to the derived authentication entity (300), wherein the authentication data have the derivation data (g1, $C_{g1}$), the certificate ($C_{PKO}$) of the public key (PKO) of the original data carrier (100) as well as a derived key pair which comprises the derived secret key (SKA) and the public key (PKO) of the original data carrier (100).

2. The method according to claim 1, **characterized in that** the public key of the original data carrier (100) is provided in the derived authentication entity (300) in order to be treated as the public key (PKO) of the derived authentication entity (300) within the context of an authentication with the derived authentication entity (300).

3. The method according to claim 1 or 2, **characterized in that** the key pair of the original data carrier (100) is provided for an authentication according to a first authentication protocol, and the key pair of the derived authentication entity (300) is provided for an authentication according to a derived authentication protocol in which unchanged steps of the first authentication protocol are executed with the public key (PKO) of the original data carrier.

4. The method according to any of the preceding claims, **characterized by** the further steps of:

Reading (S2) data out of the original data carrier (100) by a trustworthy entity (200) after an authenticating (S1) of the original data carrier (100) to the trustworthy entity (200);

authenticating (S7) the derived authentication entity (300) to the trustworthy entity (200) while employing the transferred authentication data (310); and

transferring (S8) the data read out of the original data carrier (100) to the derived authentication entity (300) by the trustworthy entity (200).

5. The method according to any of the preceding claims, **characterized in that** the original data carrier (100) derives (TS32) the secret key (SKA) for the derived authentication entity (300) from the secret key (SKO) of the original data carrier (100) while employing a random number (RND) as the derivation value (RND).

6. The method according to either of the preceding claims, **characterized in that** as derivation data (Cg1) a certificate is formed.

7. The method according to claim 6, **characterized in that** the derivation certificate ($C_{g1}$) is formed via a derived base value (g1) formed by the original data carrier (100) and/or via data read from the original data carrier (100).

8. The method according to claim 6 or 7, **characterized in that** the derivation certificate ($C_{g1}$) is formed as an attribute certificate referring to the certificate ($C_{PKO}$) for the public key (PKO) of the original data carrier (100).

9. The method according to either of the preceding claims, **characterized in that** the derivation data (Cg1) comprises a usage restriction for the derived authentication instance (300).

10. The method according to any of the preceding claims, **characterized in that** the original data carrier (100) determines (TS33), and transfers (S4) to the trustworthy entity, a derivation parameter (g1) which forms (S5) at least a part of the derivation data (Cg1).

11. The method according to any of the preceding claims, **characterized in that** the original data carrier (100) forms a derived base value (g1) using an exponentiating of the given primitive root (g) by the reciprocal of the random number (RND) and transfers to the trustworthy entity (200), which are then a portion of the authentication data (310) to be transferred to the derived authentication entity (300).

12. The method according to any of the preceding claims, **characterized by** the step, carried out within the context of authenticating the derived authentication entity (300) to an authentication partner (200, 400), of agreeing on a communication key (KKI; KKA) between the derived authentication entity (300) and the authentication partner (200, 400) on the basis of the public (PKO) and the secret key (SKA) of the derived authentication entity (300) as well as a public session key (PKI) and a secret session key (SKI) of the authentication partner (200, 400), wherein the public session key (PKI) of the trustworthy entity (200) is determined by exponentiating the base value (g1) by the secret session key (SKI) of the authentication partner (200, 400).

13. A method for authenticating an authentication entity (300) to an authentication partner (200, 400), on the basis of a public (PKO) and a secret key (SKA) of the authentication entity (300) as well as a public session key (PKD) and a secret session key (SKD) of the authentication partner (200, 400), wherein the authentication entity (300) is an authentication entity (300) derived from an original data carrier (100), wherein the secret key (SKA) of the derived authentication entity (300) was derived from a secret key (SKO), individual to the data carrier, of the original data carrier (100) by a derivation value (RND), the public key (PKA) of the derived authentication entity (300) corresponds to the public key of the original data carrier (100), and the authentication entity (300) makes available (TS91) to the authentication partner (200, 400) a derivation parameter (g1) formed from the derivation value, and the public session key (PKD) of the authentication partner (200, 400) is formed (TS92) from the secret session key (SKD) and the derivation parameter (g1).

14. A portable data carrier (100), comprising a memory, a processor and a data communication interface for data communication with an external entity (200; 300), **characterized in that** the data carrier (100) is arranged for carrying out a method according to any of claims 1 to 12 for creating a derived authentication entity (300), in the role of the original data carrier (100) together with a trustworthy entity (200) arranged therefor.

15. A system comprising a data carrier (100) according to claim 14 as original data carrier (100) and a trustworthy entity (200), **characterized in that** the trustworthy entity (200) is devised to create an authentication entity (300) derived from the original data carrier (100) in a method according to any of claims 1 to 12.

## Revendications

1. Procédé de création d'une instance d'authentification (300) dérivée d'un support de données d'origine (100), cependant que le support de données d'origine comporte une paire de clés individuelle au support de données d'origine, laquelle comprend une clé publique (PKO) et une clé secrète (SKO) du support de données d'origine (100), ainsi qu'un certificat ($C_{PKO}$) relatif à la clé publique (PKO) du support de données d'origine (100), comprenant les étapes :

    - dérivation (S3) d'une clé secrète (SKA) pour l'instance d'authentification (300) à partir de la clé secrète (SKO) du support de données d'origine (100) avec une valeur de dérivation (RND) par le support de données d'origine (100) ;
    - constitution (TS33, S5) de données de dérivation (g1, $C_{g1}$) à partir de la valeur de dérivation (RND) pour l'instance d'authentification (300) dérivée ;
    - transmission (S6) de données d'authentification (310) à l'instance d'authentification (300) dérivée ;

    cependant que les données d'authentification comportent les données de dérivation (g1, $C_{g1}$), le certificat ($C_{PKO}$) de la clé publique (PKO) du support de données d'origine (100) ainsi qu'une paire de clés dérivée qui comprend la clé secrète dérivée (SKA) et la clé publique (PKO) du support de données d'origine (100).

2. Procédé selon la revendication 1, **caractérisé en ce que** la clé publique du support de données d'origine (100) est prévue dans l'instance d'authentification (300) dérivée pour, dans le cadre d'une authentification avec l'instance d'authentification (300) dérivée, être traitée en tant que la clé publique (PKO) de l'instance d'authentification (300) dérivée.

3. Procédé selon la revendication 1 ou 2, **caractérisé en ce que** la paire de clés du support de données d'origine (100) est prévue pour une authentification suivant un premier protocole d'authentification, et que la paire de clés de l'instance d'authentification (300) dérivée est prévue pour une authentification suivant un protocole d'authentification dérivé dans lequel des étapes inchangées du premier protocole d'authentification sont exécutées avec la clé publique (PKO) du support de données d'origine.

4. Procédé selon une des revendications précédentes, **caractérisé par** les autres étapes :

    - lecture (S2) de données depuis le support de données d'origine (100) par une instance fiable (200) après une authentification (S1) du support de données d'origine (100) vis-à-vis de l'instance fiable (200) ;
    - authentification (S7) de l'instance d'authentification (300) dérivée vis-à-vis de l'instance fiable (200) en utilisant les données d'authentification (310) transmises ; et

- transmission (S8) des données lues depuis le support de données d'origine (100) à l'instance d'authentification (300) dérivée, par l'instance fiable (200).

5. Procédé selon une des revendications précédentes, **caractérisé en ce que** le support de données d'origine (100) dérive (TS32) la clé secrète (SKA), pour l'instance d'authentification (300) dérivée, à partir de la clé secrète (SKO) du support de données d'origine (100) en utilisant un chiffre aléatoire (RND) en tant que la valeur de dérivation (RND).

6. Procédé selon une des revendications précédentes, **caractérisé en ce que,** en tant que données de dérivation (Cg1), un certificat est constitué.

7. Procédé selon la revendication 6, **caractérisé en ce que** le certificat de dérivation ($C_{g1}$) est constitué par l'intermédiaire d'une valeur de base (g1) dérivée constituée par le support de données d'origine (100) et/ou par l'intermédiaire de données lues à partir du support de données d'origine (100).

8. Procédé selon la revendication 6 ou 7, **caractérisé en ce que** le certificat de dérivation ($C_{g1}$) est constitué en tant que certificat d'attribut renvoyant au certificat ($C_{PKO}$) par l'intermédiaire de la clé publique (PKO) du support de données d'origine (100).

9. Procédé selon une des revendications précédentes, **caractérisé en ce que** les données de dérivation (Cg1) comprennent une limitation d'utilisation pour l'instance d'authentification (300) dérivée.

10. Procédé selon une des revendications précédentes, **caractérisé en ce que** le support de données d'origine (100) détermine (TS33) un paramètre de dérivation (g1) et le transmet (S4) à l'instance fiable, laquelle constitue (S5) au moins une partie des données de dérivation (Cg1).

11. Procédé selon une des revendications précédentes, **caractérisé en ce que** le support de données d'origine (100) constitue une valeur de base (g1) dérivée, au moyen d'une exponentiation de la racine primitive (g) prédéterminée avec la réciproque du chiffre aléatoire (RND), et la transmet à l'instance fiable (200), laquelle sont alors une partie des données d'authentification (310) à transmettre à l'instance d'authentification dérivée (300).

12. Procédé selon une des revendications précédentes, **caractérisé par** l'étape, effectuée dans le cadre de l'authentification de l'instance d'authentification (300) dérivée vis-à-vis d'un partenaire d'authentification (200, 400), de l'accord sur une clé de communication (KKI; KKA) entre l'instance d'authentification (300) dérivée et le partenaire d'authentification (200, 400), sur la base de la clé publique (PKO) et de la clé secrète (SKA) de l'instance d'authentification (300) dérivée ainsi que d'une clé de session (PKI) publique et d'une clé de session (SKI) secrète du partenaire d'authentification (200, 400), cependant que la clé de session (PKI) publique de l'instance fiable (200) est déterminée par exponentiation de la valeur de base (g1) avec la clé de session (SKI) secrète du partenaire d'authentification (200, 400).

13. Procédé d'authentification d'une instance d'authentification (300) vis-à-vis d'un partenaire d'authentification (200, 400) sur la base d'une clé publique (PKO) et d'une clé secrète (SKA) de l'instance d'authentification (300) ainsi que d'une clé de session (PKD) publique et d'une clé de session (SKD) secrète du partenaire d'authentification (200, 400), cependant que l'instance d'authentification (300) est une instance d'authentification (300) dérivée d'un support de données d'origine (100),
cependant que la clé secrète (SKA) de l'instance d'authentification (300) dérivée a été dérivée à partir d'une clé (SKO) secrète individuelle au support de données du support de données d'origine (100), avec une valeur de dérivation (RND), que la clé publique (PKA) de l'instance d'authentification (300) dérivée correspond à la clé publique du support de données d'origine (100), et que l'instance d'authentification (300) met à disposition (TS91) du partenaire d'authentification (200, 400) un paramètre de dérivation (g1) constitué à partir de la valeur de dérivation, et que la clé de session (PKD) publique du partenaire d'authentification (200, 400) est constituée (TS92) à partir de la clé de session (SKD) secrète et du paramètre de dérivation (g1).

14. Support de données portable (100) comprenant une mémoire, un processeur et une interface de communication de données pour la communication de données avec une instance externe (200, 300), **caractérisé en ce que** le support de données (100) est conçu pour, dans le rôle du support de données d'origine (100), conjointement avec une instance (200) fiable conçue pour cela, effectuer un procédé selon une des revendications de 1 à 12 pour la création d'une instance d'authentification (300) dérivée.

**15.** Système comprenant un support de données (100) selon la revendication 14 en tant que support de données d'origine (100) et une instance (200) fiable, **caractérisé en ce que** l'instance (200) fiable est conçue pour créer lors d'un procédé selon une des revendications de 1 à 12 une instance d'authentification (300) dérivée du support de données d'origine (100).

# FIG 1

# FIG 2

100                                    200

TS11

$$PKO := g^{SKO};\ C_{PKO}$$

TS12

$$PKI := g^{SKI};\ ACV_I$$

TS13

$$KKO := PKI^{SKO}$$

TS14

$$KKI := PKO^{SKI}$$

# FIG 3

100

| | |
|---|---|
| Erzeuge Zufallszahl: RND | TS31 |
| Leite Schlüssel ab:<br>SKA:=SKO*RND | TS32 |
| Bestimme Ableitungsparameter:<br>g1:=g^(1/RND) | TS33 |
| Erzeuge Zufallszahl: RND2 | TS34 |
| Verschlüssle SKA:<br>ENC(SKA; RND2) | TS35 |

## FIG 4

100  200  300

TS41

$$ENC_{RND2}(SKA); g1$$

TS42

RND2

## FIG 5

200  300

TS61

Authentisierungsdaten:
- $C_{g1}$
- $ENC_{RND2}(SKA)$
- PKO
- $C_{PKO}$
- g1

310

TS62

Applet_VMC

TS63

Entschlüssle:
$DEC(ENC_{RND2}(SKA); RND2)$
$=: SKA$

# FIG 6

200

300

TS71

$PKI := g1^{SKI}$

TS72

$PKA := PKO$

TS73

PKI →

TS74

← $PKA; C_{g1}; C_{PKO}$

TS75

$KKI := PKA^{SKI}$

TS76

$KKA := PKI^{SKA}$

TS77

Prüfe Ableitungszertificat:
$Ver (C_{g1})$

## FIG 7

300

400

BANK

TS91

TS92

$$PKA; g1; C_{g1}; C_{PK0}$$

$$PKD := g1^{SKD}$$

TS93

PKD

TS94

TS95

$$KKA := PKD^{SKA}$$

$$KKD := PKA^{SKD}$$

TS96

Prüfe:
Ver ($C_{g1}$)

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040027

- US 5883810 A